# EUROPEAN PATENT APPLICATION

(11) **EP 4 513 257 A1**
(43) Date of publication of application: **26.02.2025**
(21) Application number: 23791136.7
(22) Date of filing: 14.04.2023
(51) Int. Cl.: G02C 7/06

(54) **LENS ELEMENT, OPTICAL LENS GROUP, MOLD, AND GLASSES**

(30) Priority: 21.04.2022 CN 202210421560; 21.04.2022 CN 202220928567 U; 07.04.2023 CN 202310369818; 07.04.2023 CN 202320781318 U
(71) Applicant: SHANGHAI MAGI LTD., Shanghai 201914 (CN)
(72) Inventor: DING, Pengfei, Shanghai 201914 (CN); FENG, Gai, Shanghai 201914 (CN)
(74) Representative: Dantz, Jan Henning
(86) International application number: PCT/CN2023/088364
(87) International publication number: WO 2023/202481

(57) **Abstract**

This application provides a lens element, an optical lens group, a mold, and spectacles. The lens element includes: a base region, where the base region includes a prescription region for correcting a refractive error of an eye; and a plurality of insular regions, where the insular regions include regions for inhibiting development of the refractive error of the eye, where at least some of the insular regions are adjacent to each other and have a shared edge; and for edges of all the insular regions on the lens element, a length of a shared edge portion is L₁, a length of a non-shared edge portion is L₂, and a ratio of L₁ to L₂ is 0.3 or more. The optical lens group includes a first lens element and a second lens element. When the first lens element and the second lens element are placed parallel to each other and coaxially, at least one relative position exists for the first lens element and the second lens element, to make the first lens element and the second lens element meet a specific relationship.

## Description

### CROSS-REFERENCE TO RELATED APPLICATIONS

This application claims priority to the following patent applications: Chinese Patent Application No. 202210421560.9, filed on April 21, 2022, Chinese Patent Application No. 202220928567.5, filed on April 21, 2022, Chinese Patent Application No. 202310369818. X, filed on April 7, 2023, and Chinese Patent Application No. 202320781318.2, filed on April 7, 2023, which are incorporated herein by reference in their entireties.

### TECHNICAL FIELD

This application relates to the optical field, and specifically, to a lens element, an optical lens group, a mold, and spectacles.

### BACKGROUND

A lens having a function of inhibiting development of refractive errors of myopia and hypermetropia in a human eye exists in the related art,
for example, a lens described in the known patent document CN104678572A. The patent describes a pair of spectacle lenses, including: a first refractive region, having a first refractive power based on a prescription for correcting a refractive error of an eye; and a second refractive region, having a refractive power different from the first refractive power and having a function of focusing an image at a position other than a retina of the eye to inhibit development of the refractive error of the eye, where near a central portion of a lens, the second refractive region is formed into a plurality of insular regions separate from each other and self-contained from each other, and the first refractive region is formed into a region other than the regions forming the second refractive region.

For example, a pair of spectacles described in patent document CN109716212B includes an ophthalmic lens mounted in a spectacles frame. The ophthalmic lens includes a plurality of light scattering centers spaced apart. The light scattering centers have a size in a range of 0.1 mm to 0.5 mm and are spaced apart by 0.8 mm or less, and for incident light transmitted by each ophthalmic lens, the ophthalmic lens scatters light incident onto the light scattering centers.

### SUMMARY

The inventor finds that although the spectacles that have the function of focusing an image at a position other than a retina of an eye to inhibit development of a refractive error of the eye before the date of application can inhibit the development of the refractive error of the eye, surface structure features of the lens element cause the visual clarity to be unnecessarily reduced.

Specifically, sectional views of a lens element in the related art (for example, CN104678572A) are shown in FIG. 1 and FIG. 2. A spectacle lens 10 is a lens having a function of correcting myopia while inhibiting the development of myopia. The spectacle lens 10 has a base region 1 and a plurality of insular regions 2 separate from each other and self-contained from each other. The base region 1 has a first refractive power based on a prescription for correcting myopia, and the insular regions have a function of focusing an image at a position other than a retina of an eye to inhibit development of a refractive error of the eye. The plurality of insular regions 2 are approximately uniformly configured near the center of the lens in a manner that a distance r apart from each other is almost equal to a value of a radius d/2. The plurality of insular regions 2 are formed in a manner of being included in a circular region with a radius R (20 mm or less) centered on an optical center O of the lens, and are configured, for example, in a manner of forming a hexagon inscribed in a circle with the radius R.

During actual application, the inventor finds that although the lens in the related art can be used to inhibit the development of myopia, the lens reduces the visual clarity of a wearer and cannot achieve a satisfactory wearing feeling.

Similarly, during actual application, the inventor also finds that CN109716212B in the related art also has the similar problem. The lens thereof reduces the visual clarity of a wearer and cannot achieve a satisfactory wearing feeling.

To resolve the foregoing technical problems, this application provides an innovative lens element. The lens element can inhibit the development of myopia, and can further provide a wearer with good visual clarity, thereby providing a satisfactory wearing feeling.

According to a first aspect, this application provides a lens element, including:
a base region, where the base region includes a prescription region for correcting a refractive error of an eye; and
a plurality of insular regions, where the insular regions include regions for inhibiting development of the refractive error of the eye,
where at least some of the insular regions are adjacent to each other and have a shared edge.

In some implementation solutions, this application provides a lens element, including:
a base region, where the base region includes a prescription region for correcting a refractive error of an eye; and
a plurality of insular regions, where the insular regions include regions for inhibiting development of the refractive error of the eye,
where at least some of the insular regions are adjacent to each other and have a shared edge; and
for edges of all the insular regions on the lens element, a length of a shared edge portion is L₁, a length of a non-shared edge portion is L₂, and a ratio of L₁ to L₂ is 0.1 or more.

In some implementation solutions, this application provides a lens element, including:
a base region, where the base region includes a prescription region for correcting a refractive error of an eye; and
a plurality of insular regions, where the insular regions include regions for inhibiting development of the refractive error of the eye,
where at least some of the insular regions are adjacent to each other and have a shared edge; and
for edges of all the insular regions on the lens element, a length of a shared edge portion is L₁, a length of a non-shared edge portion is L₂, and a ratio of L₁ to L₂ is 0.2 or more.

In some implementation solutions, this application provides a lens element, including:
a base region, where the base region includes a prescription region for correcting a refractive error of an eye; and
a plurality of insular regions, where the insular regions include regions for inhibiting development of the refractive error of the eye,
where at least some of the insular regions are adjacent to each other and have a shared edge; and
for edges of all the insular regions on the lens element, a length of a shared edge portion is L₁, a length of a non-shared edge portion is L₂, and a ratio of L₁ to L₂ is 0.3 or more.

The inventor finds through extensive research and practice that an important factor by which the lens in the related art reduces the visual clarity of the wearer is a junction of the insular region and the base region, that is, the edge of the insular region. Because the base region and the insular region have different refractive powers, the edge of the insular region is a junction of the two refractive powers, and the junction is a transition region of the refractive powers and does not have favorable optical properties, which reduces the visual clarity of the wearer. When the insular regions on the lens are separate from each other and self-contained from each other, each insular region on the lens has its own edge, resulting in excessive refractive power transition regions on the lens, which reduces the visual clarity of the wearer.

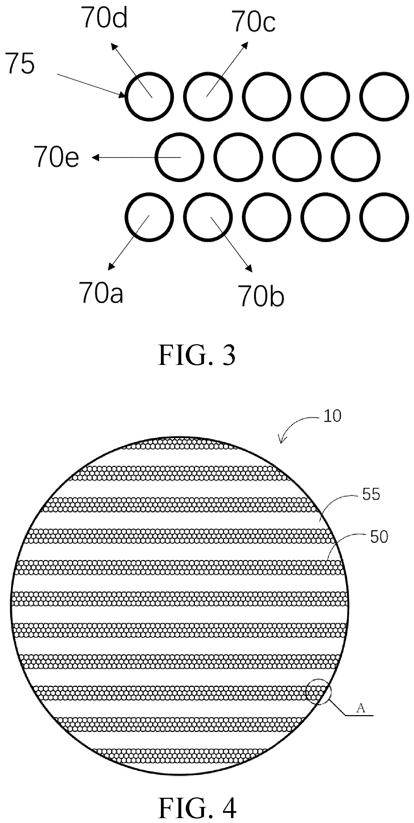

FIG. 3 is a partial enlarged view of a spectacle lens in the related art. As shown in FIG. 3, five insular regions (70a, 70b, 70c, 70d, and 70e) separate from each other and self-contained from each other exist on the lens, and an edge of each insular region in a base region has a perimeter L, so that a total perimeter of the edges of the five insular regions is 5L.

The innovative lens element of the present invention resolves the foregoing problem. In the lens element of the present invention, at least some of the insular regions are adjacent to each other and have a shared edge. In this way, the edges of the insular regions are significantly reduced without reducing the quantity of insular regions, thereby improving the visual clarity of the wearer.

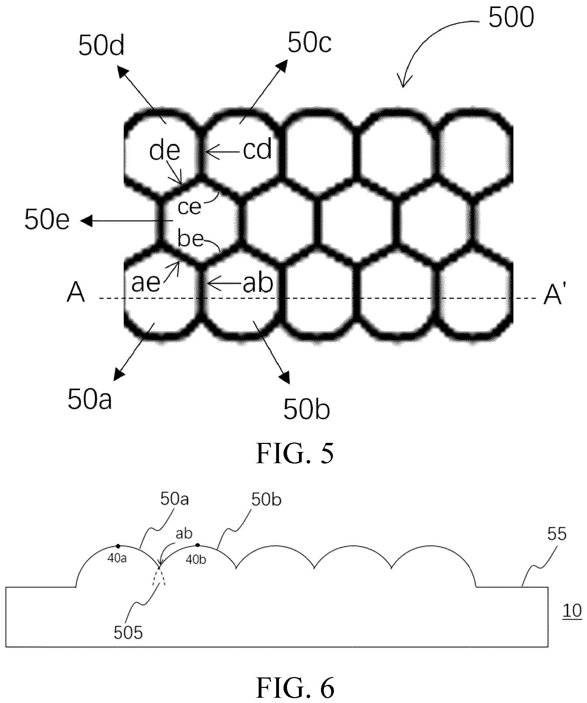

FIG. 5 is an abstract schematic top-view of an insular region according to an implementation of the present invention. As shown in FIG. 5, five insular regions (50a, 50b, 50c, 50d, and 50e) sharing edges exist on an optical lens. The insular region 50a and the insular region 50b have a shared edge ab. The insular region 50a and the insular region 50e have a shared edge ae. The insular region 50b and the insular region 50e have a shared edge be. The insular region 50c and the insular region 50e have a shared edge ce. The insular region 50c and the insular region 50d have a shared edge cd. The insular region 50d and the insular region 50e have a shared edge de. The above five insular regions (50a, 50b, 50c, 50d, and 50e) significantly reduce a total perimeter of edges in an edge sharing manner. For the insular regions (50a, 50b, 50c, 50d, and 50e) sharing edges, a length of the shared edge portions is a length of (ab + ae + be + ce + cd + de), and edges other than the shared edges are non-shared edge portions. For the edges of all the insular regions on the lens element, a length of the shared edge portions is L₁, and a length of the non-shared edge portions is L₂. It should be emphasized that the ratio of L₁ to L₂ being 0.3 or more is particularly critical to a substantial improvement in the visual clarity. The substantial improvement in the visual clarity herein is an improvement in the visual clarity that can be evidently perceived by the wearer. It is finds in the experiment that when the ratio of L₁ to L₂ is less than the threshold 0.3, the visual clarity of the wearer cannot be substantially improved.

In some implementation solutions, the insular region includes the following first insular region and/or second insular region:
the first insular region is configured to scatter incident light to inhibit development of a refractive error of an eye; and
the second insular region is configured to focus an image at a position other than a retina of the eye to inhibit the development of the refractive error of the eye.

In some implementation solutions, the prescription region for correcting a refractive error of an eye has a first refractive power, and the first refractive power is a prescription refractive power for correcting the refractive error of the eye;
the region for inhibiting the development of the refractive error of the eye has a second refractive power, and the second refractive power focus an image at a position other than the retina of the eye; and
the second refractive power is different from the first refractive power.

In some implementation solutions, edges of an insular region include: (1) a shared edge; and (2) a non-shared edge. The shared edge may be a junction of the insular region and another adjacent insular region. The non-shared edge may be a junction of the insular region and the base region.

In some implementation solutions, some or all of edges of an insular region are shared edges.

In some implementation solutions, some or all of edges of an insular region are non-shared edges.

In some implementation solutions, a shared edge of an insular region is a junction of the insular region and an adjacent insular region.

In some implementation solutions, a non-shared edge of an insular region is a junction of the insular region and the base region.

In some implementation solutions, insular regions having a shared edge are fused with each other at the shared edge.

In some implementation solutions, no base region exists between adjacent insular regions having a shared edge.

In some implementation solutions, the insular regions have optical centers self-contained from each other respectively.

In some implementation solutions, one or more insular regions are partially or completely surrounded by one or more other insular regions.

In some implementation solutions, one or more insular regions are microlenses.

In some implementation solutions, the lens element includes an insular region array, the insular region array includes a plurality of insular regions arranged successively, and adjacent insular regions have a shared edge; in a first direction, the insular region array includes a plurality of insular regions arranged successively, and adjacent insular regions have a shared edge; in a second direction, the insular region array includes a plurality of insular regions arranged successively, and adjacent insular regions have a shared edge; and an angle exists between the first direction and the second direction. The angle refers to any angle greater than 0 and less than 180 degrees, such as 10 to 170 degrees, such as 30 to 150 degrees, such as 60 to 120 degrees, or such as 90 degrees.

In some implementation solutions, the insular region array is completely overlaid by a plurality of insular regions.

In some implementation solutions, a plurality of insular region arrays are arranged on the lens element, and the plurality of insular region arrays are spaced apart from each other.

In some implementation solutions, the insular region array has a strip shape, and a plurality of insular region arrays are spaced parallel to each other.

In some implementation solutions, the insular region array has a straight strip shape, and a plurality of insular region arrays are spaced parallel to each other.

In some implementation solutions, the base region and insular regions each have a refractive surface, and a shape of the refractive surface of the insular region is different from a shape of the refractive surface of the base region, so that a refractive power of the insular region is different from a refractive power of the base region.

In some implementation solutions, the base region and insular regions each have a refractive surface, and a refractive surface of one or more insular regions is formed into a convex shape facing an object side relative to a surface shape of the base region.

In some implementation solutions, the base region and insular regions each have a refractive surface, and a refractive surface of one or more insular regions is formed into a concave shape facing an object side relative to a surface shape of the base region.

In some implementation solutions, the insular region is made of a material different from that of the base region, so that the insular region has a refractive power different from a refractive power of the base region. In some implementation solutions, the lens element has a first side surface and a second side surface opposite to the first side surface, and the lens element has one or more of the following features:
(1) one or more insular regions are located on the first side surface of the lens element;
(2) one or more insular regions are located on the second side surface of the lens element; and
(3) one or more insular regions are located between the first side surface and the second side surface of the lens element.

In some implementation solutions, one or more insular regions are formed near a center of the lens element.

In some implementation solutions, the lens element is a lens element having a function of inhibiting the development of myopia, and the insular region has a refractive power obtained by adding a positive refractive power to the base refractive power.

In some implementation solutions, the lens element is a lens element having a function of inhibiting the development of hypermetropia, and the insular region has a refractive power obtained by adding a negative refractive power to the base refractive power.

In some implementation solutions, each of the plurality of insular regions independently has any one of the following refractive surfaces: a spherical refractive surface, an aspherical refractive surface, a normally curved refractive surface, a toric refractive surface, a concave refractive surface, or a convex refractive surface.

In some implementation solutions, the base region has one or more of the following refractive surfaces: a spherical refractive surface, an aspherical refractive surface, a normally curved refractive surface, a toric refractive surface, a concave refractive surface, or a convex refractive surface.

In some implementation solutions, a shape of a projection of one or more insular regions on a side surface of the lens element includes one or more of the following: a circle, a circle-like shape, a polygon, a polygon-like shape, and a strip shape.

In some implementation solutions, the first insular region evenly disperses transmitted light in all directions. As a result, the contrast in the retinal image is reduced.

In some implementation solutions, the first insular region has a size equivalent to a wavelength of the light, and the light scattering may be considered as Rayleigh (Rayleigh) or Mie (Mie) scattering.

In some implementation solutions, a size and a shape of the first insular region are designed in such a way that the first insular region scatters incident light to reduce contrast of an object observed through a contrast-reduced region. The first insular region may be substantially spherical, elliptical, or irregularly shaped.

In some implementation solutions, the first insular region has a size large enough to scatter visible light, but small enough not to be discerned by a wearer during normal use. For example, the first insular region may have this size (measured in an xy plane), which ranges from about 0.001 mm or more (for example, about 0.005 mm or more, about 0.01 mm or more, about 0.015 mm or more, about 0.02 mm or more, about 0.025 mm or more, about 0.03 mm or more, about 0.035 mm or more, about 0.04 mm or more, about 0.045 mm or more, about 0.05 mm or more, about 0.055 mm or more, about 0.06 mm or more, about 0.07 mm or more, about 0.08 mm or less, or about 0.09 mm or less) to about 0.1 mm or less (for example, about 0.09 mm or less, about 0.08 mm or less, about 0.07 mm or less, about 0.06 mm or less, about 0.05 mm or less, about 0.04 mm or less, about 0.03 mm or less, about 0.02 mm or less, or about 0.01 mm or less).

In some implementation solutions, the lens element includes a first region and a second region surrounding the first region, the second region of the first lens element includes a plurality of spaced-apart first insular regions, and the first region of the first lens element has no first insular region; and for incident light transmitted by each lens element, the lens element scatters the light incident on the first insular region.

In some implementation solutions, the first insular region is a light scattering center. For a definition of the light scattering center, reference may be made to the patent document CN109716212B, which is incorporated herein by reference in its entirety.

In some implementation solutions, the first insular region may have a maximum size less than 0.1 mm.

In some implementation solutions, the second insular region may have a minimum size of greater than or equal to 0.1 mm.

In some implementation solutions, a shape of a projection of one or more insular regions on a side surface of the lens element has one or more of the following features:
(1) the shape of the projection is a circle, a circle-like shape, a polygon, or a polygon-like shape;
(2) an outer diameter of the shape of the projection ranges from 0.001 mm to 2.0 mm;
(3) an area of the shape of the projection ranges from 0.001 mm² to 3.14 mm²; and
(4) the shape of the projection conforms to a ratio of L² to S ranging from 4π to 20, where L is a perimeter of a cross section, and S is an area of the cross section.

In some implementation solutions, a shape of a projection of one or more insular regions on a side surface of the lens element has one or more of the following features:
(1) the shape of the projection is a circle, a circle-like shape, a polygon, or a polygon-like shape;
(2) an outer diameter of the shape of the projection ranges from 0.1 mm to 2.0 mm;
(3) an area of the shape of the projection ranges from 0.005 mm² to 3.14 mm²; and
(4) the shape of the projection conforms to a ratio of L² to S ranging from 4π to 20, where L is a perimeter of a cross section, and S is an area of the cross section.

In some implementation solutions, one or more insular regions are distributed near an optical center of the lens element.

In some implementation solutions, an equivalent diameter of the lens element is 40 mm or more.

In some implementation solutions, a thickness of the lens element at a thinnest position is 0.5 mm or more.

In some implementation solutions, one or more insular regions are distributed near an optical center of the lens element. For example, one or more insular regions are distributed in a region 10 mm away from the center. For example, one or more insular regions are distributed in a region 20 mm away from the center. For example, one or more insular regions are distributed in a region 30 mm away from the center.

In some implementation solutions, the ratio of L₁ to L₂ is 0.3 or more, 0.4 or more, 0.5 or more, 0.6 or more, 0.7 or more, 0.8 or more, 0.9 or more, 1 or more, 1.1 or more, 1.2 or more, 1.3 or more, 1.4 or more, 1.5 or more, 1.6 or more, 1.7 or more, 1.8 or more, 1.9 or more, 2 or more, 3 or more, 4 or more, or 5 or more.

In some implementation solutions, the ratio of L₁ to L₂ ranges from 0.3 to 0.4, from 0.4 to 0.5, from 0.5 to 0.6, from 0.6 to 0.7, from 0.7 to 0.8, from 0.8 to 0.9, from 0.9 to 1, from 1 to 1.1, from 1.1 to 1.2, from 1.2 to 1.3, from 1.3 to 1.4, from 1.4 to 1.5, from 1.5 to 1.6, from 1.6 to 1.7, from 1.7 to 1.8, from 1.8 to 1.9, from 1.9 to 2, from 2 to 3, from 3 to 4, or from 4 to 5.

In some implementation solutions, the ratio of L₁ to L₂ is 0.5 or more.

In some implementation solutions, the ratio of L₁ to L₂ is 1 or more.

In some implementation solutions, the lens element is a spectacle lens. The area of the spectacle lens is, for example, 300 mm² or more, 600 mm² or more, 900 mm² or more, 1000 mm² or more, 1500 mm² or more, or 2000 mm² or more.

According to a second aspect, this application provides a mold. The mold has a mold cavity, and a shape of the mold cavity is configured to correspond to a shape of any lens element described above.

According to a third aspect, this application provides a pair of spectacles, including a spectacle frame and a lens element mounted on the spectacle frame, where the lens element is any lens element described above.

In some implementation solutions, the spectacles include a first lens element and a second lens element mounted on the spectacles frame, where the spectacles have one or more of the following features (1) to (2):
(1) a plurality of straight-strip-shaped insular region arrays spaced apart from each other are arranged on the first lens element, the plurality of straight-strip-shaped insular region arrays are arranged parallel to each other, and the plurality of straight-strip-shaped insular region arrays are parallel to a connection line between a center of the first lens element and a center of the second lens element; and
(2) a plurality of straight-strip-shaped insular region arrays spaced apart from each other are arranged on the second lens element, the plurality of straight-strip-shaped insular region arrays are arranged parallel to each other, and the plurality of straight-strip-shaped insular region arrays are parallel to the connection line between the center of the first lens element and the center of the second lens element.

In some implementation solutions, the center may be an optical center, a geometric center, or a center of gravity of the first lens element or the second lens element.

The inventor further finds that although the spectacles that have the function of focusing an image at a position other than a retina of an eye to inhibit development of a refractive error of the eye before the date of application can inhibit the development of the refractive error of the eye, the visual clarity of the wearer is reduced to some extent.

The inventor realized that, according to the principle of vision production, an observer sees objects with an angle difference respectively in the left and right eyes, and a world felt by the brain is a result of mixing the two objects.

The inventor ingeniously provides a novel optical lens group and spectacles by using the foregoing principle. After a wearer wears the spectacles, a region in which the clarity of the left eye is weakened is offset in the right eye, a region in which the clarity of the right eye is weakened is offset in the left eye, and vision of the left eye and vision of the right eye are in a unique complementary relationship. Finally, signals received by the left and right eyes are integrated and fed back to the brain, and the brain can still obtain relatively clear and complete information of a target object.

Based on the foregoing findings, this application provides an optical lens group and spectacles, which are specifically as follows:
According to a fourth aspect, this application provides an optical lens group, including a first lens element and a second lens element, where
the first lens element includes:
   a base region, where the base region has a base refractive power; and
   insular regions, where the insular region has a refractive power different from the base refractive power and has a function of focusing an image at a position other than a retina of the eye to inhibit development of the refractive error of the eye;
   a 1Y^{th} optical region is arranged near an optical center of the first lens element, the 1Y^{th} optical region includes a first region A and a first region B, a plurality of self-contained insular regions are arranged in the first region A, the first region B is substantially formed by the base region or a plurality of self-contained insular regions are distributed in the first region B, and the first region B has a lower distribution density of insular regions than the first region A; and
   the second lens element includes:
      a base region, where the base region has a base refractive power; and
      an insular region, where the insular region has a refractive power different from the base refractive power and has a function of focusing an image at a position other than a retina of the eye to inhibit development of the refractive error of the eye;
      a 2Y^{th} optical region is arranged near an optical center of the second lens element, the 2Y^{th} optical region includes a second region A and a second region B, a plurality of self-contained insular regions are arranged in the second region A, the second region B is substantially formed by the base region or a plurality of self-contained insular regions are distributed in the second region B, and the second region B has a lower distribution density of insular regions than the second region A; and
      the first lens element and the second lens element are configured in such a way that when the first lens element and the second lens element are placed parallel to each other and coaxially, at least one relative position exists for the first lens element and the second lens element, to make the two lens elements meet a specific relationship, and the specific relationship includes:
         (1) a projection of the first region A of the first lens element on the second lens element at least partially overlaps with the second region B of the second lens element; and
         (2) a projection of the second region A of the second lens element on the first lens element at least partially overlaps with the first region B of the first lens element.

In some implementation solutions, the specific relationship has one or more of the following features:
(1) a plurality of first regions A spaced apart from each other are arranged in the 1Y^{th} optical area;
(2) a plurality of first regions B spaced apart from each other are arranged in the 1Y^{th} optical area;
(3) a plurality of second regions A spaced apart from each other are arranged in the 2Y^{th} optical area; and
(4) a plurality of second regions B spaced apart from each other are arranged in the 2Y^{th} optical area.

In some implementation solutions, the specific relationship has one or more of the following features:
(1) a plurality of first regions A spaced apart from each other and a plurality of first regions B spaced apart from each other in the 1Y^{th} optical region are alternately arranged in a circumferential direction;
(2) a plurality of second regions A spaced apart from each other and a plurality of second regions B spaced apart from each other in the 2Y^{th} optical region are alternately arranged in a circumferential direction;
(3) a plurality of first regions A spaced apart from each other and a plurality of first regions B spaced apart from each other in the 1Y^{th} optical region are alternately arranged in a radial direction;
(4) a plurality of second regions A spaced apart from each other and a plurality of second regions B spaced apart from each other in the 2Y^{th} optical region are alternately arranged in a radial direction;
(5) a plurality of first regions A spaced apart from each other and a plurality of first regions B spaced apart from each other in the 1Y^{th} optical region are alternately arranged in a straight-line direction; and
(6) a plurality of second regions A spaced apart from each other and a plurality of second regions B spaced apart from each other in the 2Y^{th} optical region are alternately arranged in a straight-line direction.

In some implementation solutions, the specific relationship has one or more of the following features:
(1) projections of M first regions A of the first lens element on the second lens element partially overlap or completely overlap with M second regions B of the second lens element in one-to-one correspondence; and
(2) projections of N second regions A of the second lens element on the first lens element partially overlap or completely overlap with N first regions B of the first lens element in one-to-one correspondence, where
M and N are natural numbers self-contained from each other.

In some implementation solutions, the specific relationship has one or more of the following features:
(1) an overlapping part of the projection of the first region A on the second lens element and the second region B accounts for 50% or more of each of an area of the first region A and an area of the first region B; and
(2) an overlapping part of the projection of the second region A on the first lens element and the first region B accounts for 50% or more of each of an area of the first region B and an area of the second region A.

In some implementation solutions, the optical lens group has one or more of the following features:
(1) all first regions A on the first lens element form a rotationally symmetric pattern, and a rotational symmetry center of the rotationally symmetric pattern is the optical center of the first lens element;
(2) all first regions B on the first lens element form a rotationally symmetric pattern, and a rotational symmetry center of the rotationally symmetric pattern is the optical center of the first lens element;
(3) all second regions A on the second lens element form a rotationally symmetric pattern, and a rotational symmetry center of the rotationally symmetric pattern is the optical center of the second lens element; and
(4) all second regions B on the second lens element form a rotationally symmetric pattern, and a rotational symmetry center of the rotationally symmetric pattern is an optical center of the second lens element.

In some implementation solutions, the optical lens group has one or more of the following features:
(1) one or each first region A of the first lens element is in an annular shape, and a symmetry center of the annular shape is the optical center of the first lens element;
(2) one or each first region B of the first lens element is in an annular shape, and a symmetry center of the annular shape is the optical center of the first lens element;
(3) one or each second region A of the second lens element is in an annular shape, and a symmetry center of the annular shape is the optical center of the second lens element; and
(4) one or each second region B of the second lens element is in an annular shape, and a symmetry center of the annular shape is the optical center of the second lens element.

In some implementation solutions, the optical lens group has one or more of the following features:
(1) the 1Y^{th} optical region is formed by one or more first regions A and one or more first regions B;
(2) the 2Y^{th} optical region is formed by one or more second regions A and one or more second regions B;
(3) in the 1Y^{th} optical region, a total area of the insular regions ranges from 10% to 60% (for example, 20%, 30%, 40%, or 50%) relative to a total area of the 1Y^{th} optical region; and
(4) in the 2Y^{th} optical region, a total area of the insular regions ranges from 10% to 60% (for example, 20%, 30%, 40%, or 50%) relative to a total area of the 2Y^{th} optical region.

In some implementation solutions, the specific relationship has one or more of the following features:
(1) a projection of the 1Y^{th} optical region on the second lens element partially or completely overlaps with the 2Y^{th} optical region;
(2) a projection of the 2Y^{th} optical region on the first lens element partially or completely overlaps with the 1Y^{th} optical region;
(3) a shape of the 1Y^{th} optical region of the first lens element is a rotationally symmetrical pattern, and a symmetry center of the rotationally symmetric pattern is the optical center of the first lens element;
(4) a shape of the 2Y^{th} optical region of the second lens element is a rotationally symmetrical pattern, and a symmetry center of the rotationally symmetric pattern is the optical center of the second lens element.

In some implementation solutions, the optical lens group has one or more of the following features:
(1) a 1X^{th} optical region is further arranged near the optical center of the first lens element, the 1X^{th} optical region is closer to the optical center of the first lens element than the 1Y^{th} optical region, and the 1X^{th} optical region is substantially formed by the base region; and
(2) a 2X^{th} optical region is further arranged near the optical center of the second lens element, the 2X^{th} optical region is closer to the optical center of the second lens element than the 2Y^{th} optical region, and the 2X^{th} optical region is substantially formed by the base region.

In some implementation solutions, the specific relationship further includes:
(1) a projection of the 1X^{th} optical region on the second lens element partially or completely overlaps with the 2X^{th} optical region;
(2) a projection of the 2X^{th} optical region on the first lens element partially or completely overlaps with the 1X^{th} optical region;
(3) a shape of the 1X^{th} optical region of the first lens element is a rotationally symmetrical pattern, and a symmetry center of the rotationally symmetric pattern is the optical center of the first lens element;
(4) a shape of the 2X^{th} optical region of the second lens element is a rotationally symmetrical pattern, and a symmetry center of the rotationally symmetric pattern is the optical center of the first lens element.

In some implementation solutions, the optical lens group has one or more of the following features:
(1) a 1Z^{th} optical region is further arranged near the optical center of the first lens element, the 1Z^{th} optical region is farther away from the optical center than the 1Y^{th} optical region, and a plurality of self-contained insular regions are arranged in the 1Z^{th} optical region; and
(2) a 2Z^{th} optical region is further arranged near the optical center of the second lens element, the 2Z^{th} optical region is farther away from the optical center than the 2Y^{th} optical region, and a plurality of self-contained insular regions are arranged in the 2Z^{th} optical region.

In some implementation solutions, the specific relationship has one or more of the following features:
(1) a projection of the 1Z^{th} optical region on the second lens element partially or completely overlaps with the 2Z^{th} optical region;
(2) a projection of the 2Z^{th} optical region on the first lens element partially or completely overlaps with the 1Z^{th} optical region;
(3) the 1Z^{th} optical region and the 2Z^{th} optical region have substantially the same distribution density of insular regions;
(4) a shape of the 1Z^{th} optical region of the first lens element is a rotationally symmetrical pattern, and a symmetry center of the rotationally symmetric pattern is the optical center of the first lens element;
(5) a shape of the 2Z^{th} optical region of the second lens element is a rotationally symmetrical pattern, and a symmetry center of the rotationally symmetric pattern is the optical center of the first lens element.

In some implementation solutions, the optical lens group has one or more of the following features:
(1) the 1X^{th} optical region is located within a circular region with a radius of R₁ mm and with the optical center of the first lens element as the center, and R₁ is any value between 2.5 and 10;
(2) the 2X^{th} optical region is located within a circular region with a radius of R₁ mm and with the optical center of the second lens element as the center, and R₁ is any value between 2.5 and 10;
(3) the 1X^{th} optical region does not overlap with the 1Y^{th} optical region; and
(4) the 2X^{th} optical region does not overlap with the 2Y^{th} optical region.

In some implementation solutions, the optical lens group has one or more of the following features:
(1) the 1Y^{th} optical region is located within a circular region with a radius of R₂ mm and with the optical center of the first lens element as the center, and R₂ is any value between 5 and 35; and
(2) the 2Y^{th} optical region is located within a circular region with a radius of R₂ mm and with the optical center of the second lens element as the center, and R₂ is any value between 5 and 35.

In some implementation solutions, the optical lens group has one or more of the following features:
(1) the 1Z^{th} optical region is located within a circular region with a radius of R₃ mm and with the optical center of the first lens element as the center, and R₃ is any value between 5 and 35; and
(2) the 2Z^{th} optical region is located within a circular region with a radius of R₃ mm and with the optical center of the second lens element as the center, and R₃ is any value between 5 and 35;
(3) the 1Z^{th} optical region does not overlap with the 1Y^{th} optical region; and
(4) the 2Z^{th} optical region does not overlap with the 2Y^{th} optical region.

In some implementation solutions, the optical lens group has one or more of the following features:
(1) In the first lens element, a region other than insular regions is a base region.
(2) In the second lens element, a region other than insular regions is a base region.

In some implementation solutions, the optical lens group has one or more of the following features:
(1) a shape of a section of one or each insular region is a circle or a similar shape;
(2) an outer diameter of one or each insular region ranges from 0.8 mm to 2.0 mm;
(3) an area of one or each insular region ranges from 0.50 mm² to 3.14 mm²; and
(4) one or each insular region conforms to a ratio of L² to S ranging from 4π to 20, where L is a perimeter of the insular region, and S is an area of the insular region.

In some implementation solutions, the optical lens group has one or more of the following features:
(1) a surface shape of the insular region of the first lens element is different from a surface shape of the base region, so that a refractive power of the insular region is different from a refractive power of the base region; and
(2) a surface shape of the insular region of the second lens element is different from a surface shape of the base region, so that a refractive power of the insular region is different from a refractive power of the base region.

In some implementation solutions, the optical lens group has one or more of the following features:
(1) a surface shape of the insular region of the first lens element is formed into a convex shape or a concave shape relative to a surface shape of the base region; and
(2) a surface shape of the insular region of the second lens element is formed into a convex shape or a concave shape relative to a surface shape of the base region.

**In** some implementation solutions, the optical lens group has one or more of the following features:
(1) the insular region of the first lens element is made of a material different from a material of the base region of the first lens element, so that the insular region of the first lens element has a refractive power different from a refractive power of the base region of the first lens element; and
(2) the insular region of the second lens element is made of a material different from a material of the base region of the second lens element, so that the insular region of the second lens element has a refractive power different from a refractive power of the base region of the second lens element.

In some implementation solutions, the optical lens group has one or more of the following features:
(1) an equivalent diameter of the first lens element is 40 mm or more;
(2) an equivalent diameter of the second lens element is 40 mm or more;
(3) a thickness of the first lens element at a thinnest position is 0.5 mm or more;
(4) a thickness of the second lens element at a thinnest position is 0.5 mm or more; and
(5) the first lens element and the second lens element have substantially the same shape and size.

In some implementation solutions, the optical lens group has one or more of the following features:
(1) the first lens element is an optical lens having a function of inhibiting the development of myopia, and the insular region of the first lens element has a refractive power obtained by adding a positive refractive power to the base refractive power; and
(2) the first lens element is an optical lens having a function of inhibiting the development of hypermetropia, and the insular region of the first lens element has a refractive power obtained by adding a negative refractive power to the base refractive power.

In some implementation solutions, the optical lens group has one or more of the following features:
(1) the second lens element is an optical lens having a function of inhibiting the development of myopia, and the insular region of the second lens element has a refractive power obtained by adding a positive refractive power to the base refractive power; and
(2) the second lens element is an optical lens having a function of inhibiting the development of hypermetropia, and the insular region of the second lens element has a refractive power obtained by adding a negative refractive power to the base refractive power.

In some implementation solutions, the first lens element and the second lens element are respectively configured to be worn in front of the two eyes of the wearer.

According to a fifth aspect, this application provides a pair of spectacles, including a spectacle frame and an optical lens group mounted on the spectacle frame, where the optical lens group is any optical lens group described above.

According to a sixth aspect, this application provides a method for assembling a pair of spectacles, including:
providing a spectacle frame and an optical lens group mounted on the spectacle frame, where the optical lens group is any optical lens group described above; and
respectively mounting the first lens element and the second lens element on the spectacles frame at positions corresponding to a first eye and a second eye of a wearer, where
relative positions of the first lens element and the second lens element are configured to satisfy the following specific relationship, where the specific relationship includes:
   (1) the first region A of the first lens element forms a 1A^{th} projection on the first eye, the second region B of the second lens element forms a 2B^{th} projection on the second eye, and the 1A^{th} projection after being translated by an interpupillary distance toward the second eye can at least partially overlap or completely overlap with the 2B^{th} projection; and
   (2) the second region A of the second lens element forms a 2A^{th} projection on the second eye, the first region B of the first lens element forms a 1B^{th} projection on the first eye, and the 2A^{th} projection after being translated by the interpupillary distance toward the first eye can at least partially overlap or completely overlap with the 1B^{th} projection.

### Beneficial effects:

The optical lens and the spectacles of this application have one or more of the following beneficial effects:
(1) The lens element has a function of inhibiting development of a refractive error of an eye; and
(2) the lens element inhibits the development of the refractive error of the eye, and further provides the wearer with good visual clarity.

The optical lens group and the spectacles of this application have one or more of the following beneficial effects:
(1) The first lens element/the second lens element has a function of inhibiting development of a refractive error of an eye; and
(2) the first lens element/the second lens element inhibits the development of the refractive error of the eye, and further provides the wearer with good visual clarity.

### BRIEF DESCRIPTION OF THE DRAWINGS

The accompanying drawings described herein are used to provide a further understanding of this application, and form a part of this application. Exemplary embodiments of this application and descriptions thereof are used to explain this application, and do not constitute any inappropriate limitation to this application. In the accompanying drawings:

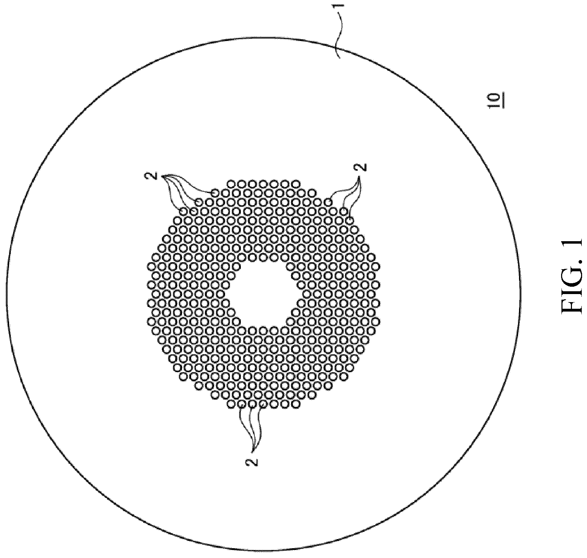

FIG. 1 is a plan view of a spectacle lens according to an implementation of the related art.

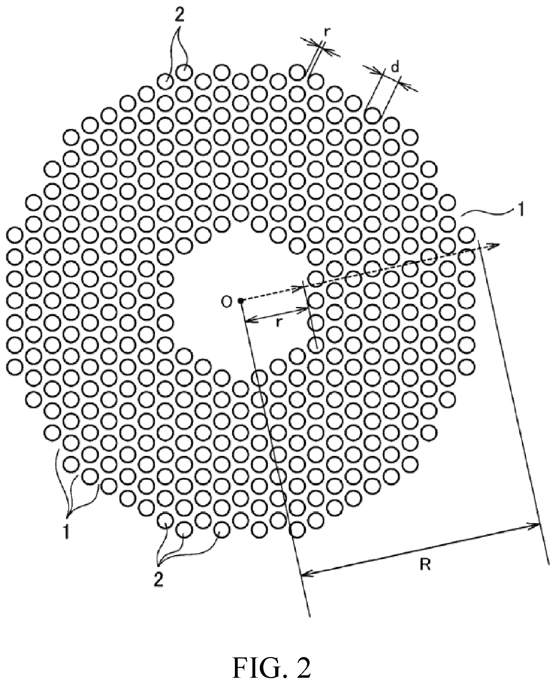

FIG. 2 is a partially enlarged view of FIG. 1.
FIG. 3 is an abstract schematic top-view of an insular region of a spectacle lens according to an implementation of the related art.
FIG. 4 is an abstract schematic diagram of a lens element according to some implementations of the present invention.
FIG. 5 is an abstract schematic top-view of an insular region of a lens element according to some implementations of the present invention.
FIG. 6 is an abstract schematic diagram of a longitudinal section of an insular region of a lens element according to an implementation of the present invention.
FIG. 7 is an abstract schematic top-view (A) and a schematic longitudinal-section diagram (B) of an insular region of a lens element according to an implementation of the present invention.
FIG. 8 is an abstract schematic diagram of a lens element according to some implementations of the present invention.
FIG. 9 is an abstract schematic diagram of a pair of spectacles according to some implementations of the present invention.
FIG. 10 is an abstract schematic diagram of a first lens element and a second lens element of a pair of spectacles according to some implementations of the present invention.
FIG. 11 is an abstract schematic diagram of a lens element of spectacles according to Embodiment 1 of the present invention.
FIG. 12 is an abstract schematic diagram of a lens element of spectacles according to Comparative Example 2 of the present invention.
FIG. 13 is an abstract schematic diagram of a lens element of spectacles according to Embodiment 3 of the present invention.
FIG. 14 is an abstract schematic diagram of a lens element of spectacles according to Comparative Example 3 of the present invention.
FIG. 15 is an abstract schematic diagram of a lens element according to some implementations of the present invention.
FIG. 16 is an abstract schematic diagram of a lens element according to some implementations of the present invention.
FIG. 17 is an abstract schematic diagram of a mold according to some implementations of the present invention.
(a) of FIG. 18 is a schematic diagram of a first lens element according to some embodiments of this application.
(b) of FIG. 18 is a schematic diagram of a second lens element according to some embodiments of this application.
(c) of FIG. 18 is a schematic diagram of overlapping between a first lens element and a second lens element when being placed parallel to each other and coaxially according to some embodiments of this application.
(a) of FIG. 19 is a schematic diagram of a first lens element according to some embodiments of this application.
(b) of FIG. 19 is a schematic diagram of a second lens element according to some embodiments of this application.
(c) of FIG. 19 is a schematic diagram of overlapping between a first lens element and a second lens element when being placed parallel to each other and coaxially according to some embodiments of this application.
(a) of FIG. 20 is a schematic diagram of a first lens element according to some embodiments of this application.
(b) of FIG. 20 is a schematic diagram of a second lens element according to some embodiments of this application.
(c) of FIG. 20 is a schematic diagram of overlapping between a first lens element and a second lens element when being placed parallel to each other and coaxially according to some embodiments of this application.
(a) of FIG. 21 is a schematic diagram of a first lens element according to some embodiments of this application.
(b) of FIG. 21 is a schematic diagram of a second lens element according to some embodiments of this application.
(a) of FIG. 22 is a schematic diagram of a first lens element according to some embodiments of this application.
(b) of FIG. 22 is a schematic diagram of a second lens element according to some embodiments of this application.
(a) of FIG. 23 is a sectional view of a first lens element according to some embodiments.
(b) of FIG. 23 is an enlarged view of a part A in (a) of FIG. 23.
(a) of FIG. 24 is a sectional view of a first lens element according to some embodiments.
(b) of FIG. 24 is an enlarged view of a part A in (a) of FIG. 24.

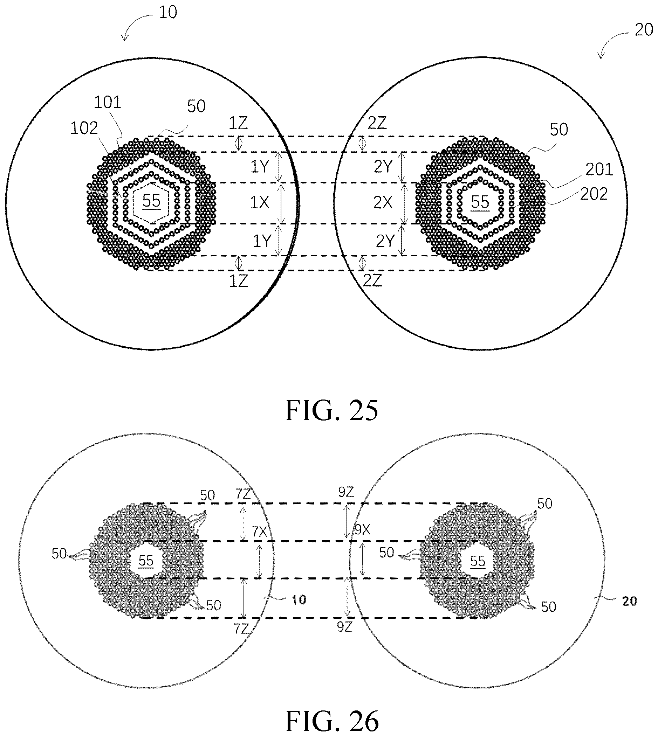

FIG. 25 is a schematic diagram of an optical lens group according to some embodiments of this application.
FIG. 26 is a schematic diagram of an optical lens group of a comparative example.

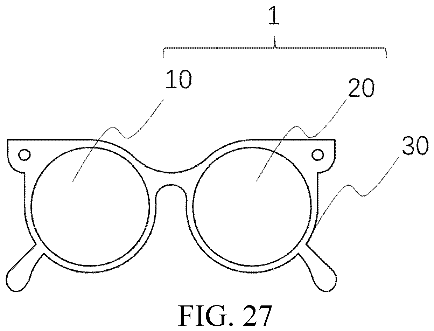

FIG. 27 is a schematic diagram of spectacles according to some embodiments of this application.

### DETAILED DESCRIPTION

Implementation solutions of the present invention are described in detail below with reference to embodiments. However, those skilled in the art may understand that the following embodiments are only used for describing the present invention and should not be construed as a limitation to the scope of the present invention.

As used herein (in the specification), "around", "about", or "approximately" generally means within 20%, preferably within 10%, and more preferably within 5% of a given value or range. Numerical quantities given herein are approximate, implying the term "around", "about", or "approximately" (if such a term is not expressly stated).

In the present invention, although technical features (such as structures, dimensions, parameters, and performance) of a lens element subject, an optical lens group subject, and a spectacles subject are described, a person skilled in the art should understand that there may be some inaccuracies in actual production. Therefore, when a difference between an object and any solution recorded in the present invention lies only within a manufacturing or operation tolerance range expected in the art (for example, within ± 5%, for another example, within ± 3%, or for another example, within ± 1%), it should be considered that the object and the technical solution of the present invention constitute the same or equivalent solution.

In the present invention, the term "part" means greater than 0% and less than 100%, for example, 1% to 10%, 10% to 20%, 20% to 30%, 30% to 40%, 40% to 50%, 50% to 60%, 60% to 70%, 70% to 80%, 80% to 90%, or 90% to 99%.

Similarly, "a" or "an" is used to describe elements and compositions of this application. This is merely for brevity and general meaning of the present invention. Unless the meaning is clearly expressed in another manner, the description should be understood as including one or at least one, and the singular also includes the plural.

It should be understood that orientation or position relationships indicated by the terms such as "midpoint", "longitudinal", "lateral", "front", "back", "left", "right", "vertical", "horizontal", "top", "bottom", "inside", and "outside" are based on orientation or position relationships shown in the accompanying drawings, and are used only for ease and brevity of illustration and description of the present invention, rather than indicating or implying that the mentioned apparatus or element needs to have a particular orientation or needs to be constructed and operated in a particular orientation. Therefore, such terms should not be construed as limiting the protected content of the present invention.

It should be understood that, in the accompanying drawings of this application, to help readers more clearly identify some structural features, the accompanying drawings intentionally enlarge and show the some structural features, so that scales of some accompanying drawings are different from scales of actual products. A person skilled in the art should understand that the foregoing scales are merely scaled to more clearly reflect specific structural features.

FIG. 4 shows a lens element according to some implementations of this application. As shown in the figure, the lens element 10 includes a base region 55 and a plurality of insular regions 50. The base region 55 is a prescription region for correcting a refractive error of an eye. The insular regions 50 are regions for inhibiting development of the refractive error of the eye. One or more adjacent insular regions 50 on the lens element 10 have a shared edge.

As described above, the inventor finds through extensive research and practice that an important factor by which the lens in the related art reduces the visual clarity of the wearer is a junction of the insular region and the base region, that is, the edge of the insular region. Because the base region and the insular region have different refractive powers, the edge of the insular region is a junction of the two refractive powers, and the junction is a transition region of the refractive powers and does not have favorable optical properties, which reduces the visual clarity of the wearer. When the insular regions on the lens are separate from each other and self-contained from each other, each insular region on the lens has its own edge, resulting in excessive refractive power transition regions on the lens, which reduces the visual clarity of the wearer. The innovative lens element of the present invention resolves the foregoing problem. In the lens element of the present invention, one or more insular regions have a shared edge with one or more other insular regions adjacent to the one or more insular regions. **In** this way, the edges of the insular regions are significantly reduced without reducing the quantity of insular regions, thereby improving the visual clarity of the wearer.

FIG. 5 is a partially enlarged view of FIG. 4, showing a partially enlarged view of an insular region on the lens element. As shown in FIG. 5, a local region of the optical lens includes five insular regions (50a, 50b, 50c, 50d, and 50e) sharing edges. The insular region 50a and the insular region 50b have a shared edge ab. The insular region 50a and the insular region 50e have a shared edge ae. The insular region 50b and the insular region 50e have a shared edge be. The insular region 50c and the insular region 50e have a shared edge ce. The insular region 50c and the insular region 50d have a shared edge cd. The insular region 50d and the insular region 50e have a shared edge de. The above five insular regions (50a, 50b, 50c, 50d, and 50e) significantly reduce a total perimeter of edges in an edge sharing manner.

In some implementation solutions, a first insular region and a second insular region adjacent to each other sharing an edge significantly reduce a total perimeter of edges in an edge sharing manner. The shared edge is both an edge of the first insular region and an edge of the second insular region. It is assumed that in the first insular region, an edge with a length of 3 mm is a shared edge and edges with a length of 7 mm are non-shared edges; and in the second insular region, an edge with a length of 3 mm is a shared edge and edges with a length of 7 mm are non-shared edges. Therefore, a total length of edges of the first insular region and the second insular region is 7 mm + 7 mm + 3 mm = 17 mm. **In** the total length, because an edge with a length of 3 mm is shared by the first insular region and the second insular region, calculation is performed only once. Compared with a case in which the first insular region and the second insular region are spaced apart, a total perimeter of edges of the first insular region and the second insular region adjacent to each other sharing an edge is reduced.

In some implementation solutions, no base region exists between adjacent insular regions having a shared edge.

FIG. 6 is an abstract schematic diagram of a longitudinal section (a longitudinal section AA' in FIG. 5) of a lens element according to an implementation of the present invention. As shown in the figure, in some implementation solutions, the lens element 10 has a base region 55 and adjacent insular regions (50a and 50b), and the adjacent insular regions (50a and 50b) have a shared edge (ab). The insular regions (50a and 50b) having the shared edge are fused with each other at the shared edge (ab). A part of the insular region 50a and a part of the insular region 50b are fused with each other to form a fused region 505. The insular regions (50a and 50b) with the shared edge may be prepared by using a method known in the art (for example, 3D printing, mold casting, or machining).

As shown in FIG. 6, in some implementation solutions, the insular regions (50a and 50b) have optical centers (40a and 40b) self-contained from each other respectively. That the optical centers (40a and 40b) are self-contained from each other mean that the optical centers are spaced apart from each other and the spacing between the optical centers is greater than zero.

In some implementation solutions, the optical center may be defined as an intersection between an optical axis and a refractive surface.

In some implementation solutions, for a lens with a toric surface, the optical center may be defined as the vertex of the toric surface. For example, for a convex curved surface, the optical center is the highest point of the convex curved surface. For example, for a concave curved surface, the optical center is the lowest point of the concave curved surface.

As shown in FIG. 5, in some implementation solutions, the lens element includes an insular region array 500, the insular region array 500 includes a plurality of insular regions (50a, 50b, 50c, 50d, and 50e) arranged successively, and the adjacent insular regions (50a and 50b) have a shared edge (ab).

As shown in FIG. 5, in some implementation solutions, the insular region array 500 is completely overlaid by a plurality of insular regions (50a, 50b, 50c, 50d, and 50e). Based on this solution, adjacent insular regions in the insular region array fully share an edge, thereby significantly reducing a total perimeter of edges and improving optical quality of the lens element.

As shown in FIG. 4, in some implementation solutions, a plurality of insular region arrays 500 are arranged on the lens element, and the plurality of insular region arrays 500 are spaced apart from each other. Based on this solution, positions of the plurality of insular region arrays 500 and the base region 55 are properly configured, so that a lens element with improved optical quality can be obtained, to inhibit the development of the refractive error of the eye, and further provide the wearer with good visual clarity.

As shown in FIG. 4, in some implementation solutions, the insular region array 500 has a strip shape, and the plurality of insular region arrays 500 are spaced parallel to each other. Based on this solution, the plurality of insular region arrays 500 can form stripes distributed in parallel on the lens element, and such a pattern helps provide the wearer with good visual clarity.

As shown in FIG. 4, in some implementation solutions, the insular region array 500 has a straight strip shape, and the plurality of insular region arrays 500 are spaced parallel to each other. Based on this solution, the plurality of insular region arrays 500 can form straight stripes distributed in parallel on the lens element, and such a pattern helps provide the wearer with good visual clarity.

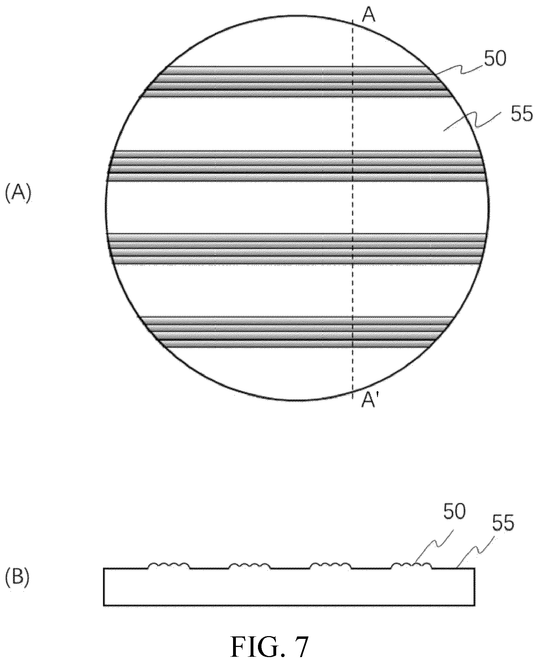

(A) and (B) of FIG. 7 are respectively a schematic top view and a view of a longitudinal section (section AA') of a lens element according to some embodiments of this application. As shown in FIG. 7, in some implementation solutions, a projection of the insular region 50 on the surface of the lens element is strip-shaped. A width of the strip-shaped insular region 50 ranges, for example, from 0.5 mm to 2 mm, for example, from 1 mm to 1.5 mm. The plurality of strip-shaped insular regions 50 are arranged in parallel, and adjacent insular regions 50 have a shared edge. The shared edge is a long edge of the strip-shaped insular region.

In some implementation solutions, the strip-shaped insular region 50 may be a cylindrical lens or a cylindrical compound lens.

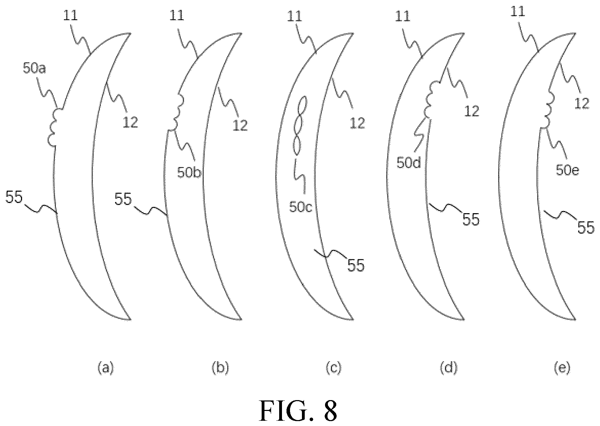

FIG. 8 is an abstract schematic diagram of a lens element according to some implementations of this application.

As shown in (a) of FIG. 8, in some implementation solutions, the lens element has a first side surface 11 and a second side surface 12 opposite to the first side surface 11, one or more insular regions 50a are located on the first side surface 11 of the lens element, and a refractive surface of the insular region 50a is formed into a convex shape facing an object side relative to a surface shape of the base region.

As shown in (b) of FIG. 8, in some implementation solutions, the lens element has a first side surface 11 and a second side surface 12 opposite to the first side surface 11, one or more insular regions 50b are located on the first side surface 11 of the lens element, and a refractive surface of the insular region 50b is formed into a concave shape facing an object side relative to a surface shape of the base region.

As shown in (c) of FIG. 8, in some implementation solutions, the lens element has a first side surface 11 and a second side surface 12 opposite to the first side surface 11, and one or more insular regions 50c are located between the first side surface 11 and the second side surface 12 of the lens element. The insular region 50c is made of a material different from that of the base region, so that the insular region 50c has a refractive power different from a refractive power of the base region.

As shown in (d) of FIG. 8, in some implementation solutions, the lens element has a first side surface 11 and a second side surface 12 opposite to the first side surface 11, one or more insular regions 50d are located on the second side surface 12 of the lens element, and a refractive surface of the insular region 50d is formed into a convex shape facing an object side relative to a surface shape of the base region.

As shown in (e) of FIG. 8, in some implementation solutions, the lens element has a first side surface 11 and a second side surface 12 opposite to the first side surface 11, one or more insular regions 50e are located on the second side surface 12 of the lens element, and a refractive surface of the insular region 50e is formed into a concave shape facing an object side relative to a surface shape of the base region.

In some implementation solutions, the base region and insular regions each have a refractive surface, and a shape of the refractive surface of the insular region is different from a shape of the refractive surface of the base region, so that a refractive power of the insular region is different from a refractive power of the base region.

In some implementation solutions, the base region and insular regions each have a refractive surface, and a refractive surface of one or more insular regions is formed into a convex shape facing an object side relative to a surface shape of the base region.

In some implementation solutions, the base region and insular regions each have a refractive surface, and a refractive surface of one or more insular regions is formed into a concave shape facing an object side relative to a surface shape of the base region.

In some implementation solutions, the insular region is made of a material different from that of the base region, so that the insular region has a refractive power different from a refractive power of the base region. For example, the base region is made of a material with a first refractive index, and the insular region is made of a material with a second refractive index.

In some implementation solutions, a part of the insular region is made of a material different from a material forming the base region. That is to say, a high-refractive-index material portion with a large refractive index is arranged in the insular region in a substantially plano-convex shape inward from a surface of the insular region in a thickness direction. Similarly, with this structure, a function the same as the function of the insular region in the foregoing implementation can be obtained. In this case, for example, a plastic material such as a CR₃9 material may be used as the material for forming the base region. The CR₃9 material is made of a thermally curable allyl resin (allyl resin) with a refractive index of 1.5. For example, a plastic material made of a thermally curable polythiourethane resin (polythiourethane resin) with a refractive index of 1.67 may be used as a high-refraction material to prepare the insular region.

As shown in FIG. 4, in some implementation solutions, one or more insular regions are formed near a center of the lens element. The center of the lens element is, for example, an optical center of the lens element. The center of the lens element is, for example, a geometric center of the lens element. The center of the lens element is, for example, a center of gravity of the lens element. The term "near" may be understood as a region within a range of 20 mm from the center, optionally a region within a range of 15 mm from the center, further optionally a region within a range of 10 mm from the center, and further optionally a region within a range of 5 mm from the center.

In some implementation solutions, the lens element is a lens element having a refractive power of inhibiting the development of myopia, and the insular region has a refractive power obtained by adding a positive refractive power to the first refractive power.

In some implementation solutions, the lens element is a lens element having a refractive power of inhibiting the development of hypermetropia, and the insular region has a refractive power obtained by adding a negative refractive power to the first refractive power.

As shown in FIG. 5 to FIG. 7, in some implementation solutions, a shape of a projection of one or more insular regions on a side surface of the lens element is a circle, a circle-like shape, a polygon, a polygon-like shape, or a strip shape.

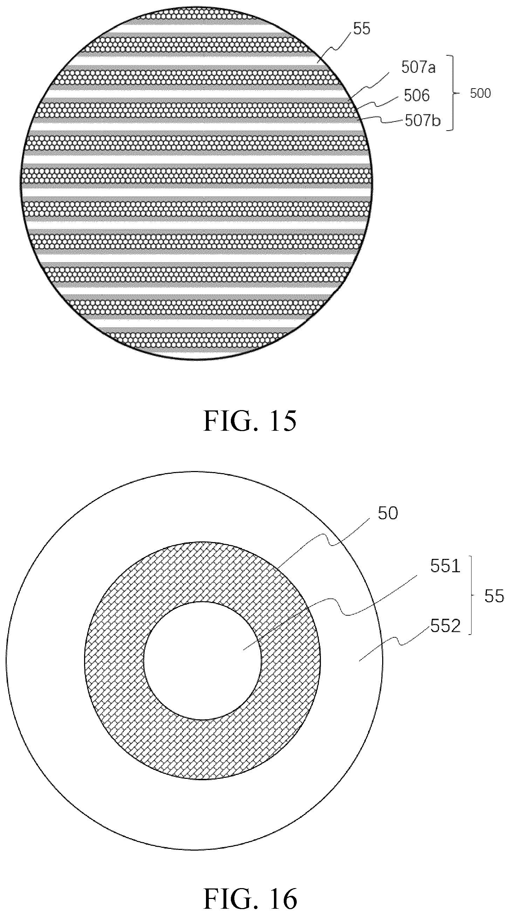

FIG. 15 is a schematic diagram of a lens element according to some implementations of this application. As shown in the figure, insular regions with different shape of the projections are arranged on the lens element. For example, a polygonal insular region 506 is arranged on the lens element. In another example, strip-shaped insular regions (507a and 507b) are arranged on the lens element.

In some implementation solutions, as shown in FIG. 15, an insular region array 500 is arranged on the lens element. A plurality of polygonal insular regions 506 and two strip-shaped insular regions (507a and 507b) are densely laid on the insular region array 500. The two strip insular regions (507a and 507b) are respectively located on two opposite sides of the insular region array 500, and the plurality of polygonal insular regions 506 are located between the two strip insular regions (507a and 507b). Adjacent polygonal insular regions 506 have a shared edge. Each of the two strip insular regions (507a and 507b) has a shared edge with each of the plurality of polygonal insular regions 506.

In some implementation solutions, as shown in FIG. 15, the insular region array 500 is in a straight strip shape. In a pair of spectacles, the insular region array 500 in the straight strip shape may be configured parallel to a connection line between centers of two lenses of the spectacles. Such an arrangement is beneficial to providing an improved reading visual experience.

In some implementation solutions, a circle, a circle-like shape, a polygon, or a polygon-like shape refers to a shape with a length-width ratio range in an interval of [1, 2].

In some implementation solutions, a strip shape refers to a shape with a length-width ratio range in an interval of (2, + ∞), for example, a shape with a length-width ratio range in (2, 100].

In some implementation solutions, a size of the shape of the projection in at least one direction is 2 mm or less.

In some implementation solutions, a size of the shape of the projection in at least one direction ranges from 0.001 mm to 2 mm.

In some implementation solutions, a size of the shape of the projection in at least one direction ranges from 0.01 mm to 2 mm.

In some implementation solutions, a size of the shape of the projection in at least one direction ranges from 0.1 mm to 2 mm.

In some implementation solutions, a size of the shape of the projection in at least one direction ranges from 0.5 mm to 2 mm.

In some implementation solutions, an outer diameter of the shape of the projection ranges from 0.8 mm to 2.0 mm.

In some implementation solutions, a lower limit of the area of the shape of the projection is 0.001 mm², for example, 0.01 mm², for example, 0.1 mm², or for example, 1 mm².

In some implementation solutions, an upper limit of the area of the shape of the projection is 100 mm², for example, 3 mm², for example, 10 mm², or for example, 100 mm².

In some implementation solutions, an area of the shape of the projection ranges from 0.001 mm² to 3.14 mm².

In some implementation solutions, an area of the shape of the projection ranges from 0.005 mm² to 3.14 mm².

In some implementation solutions, an area of the shape of the projection ranges from 0.05 mm² to 3.14 mm².

In some implementation solutions, an area of the shape of the projection ranges from 0.50 mm² to 3.14 mm².

In some implementation solutions, the shape of the projection conforms to a ratio of L² to S ranging from 4π to 20, where L is a perimeter of a cross section, and S is an area of the cross section.

In some implementation solutions, the cross section refers to a surface taken in a direction parallel to a side surface of the lens element.

In some implementation solutions, an equivalent diameter of the lens element is 40 mm or more, or for example, 60 mm or more, or for example, ranges from 40 to 80 mm. The equivalent diameter refers to a diameter of a circle with an equal area.

In some implementation solutions, a thickness of the lens element at a thinnest position is 0.5 mm or more, for example, 1 mm or more, or for example, 5 mm or more, or for example, ranges from 0.5 mm to 10 mm.

In some implementation solutions, for edges of all the insular regions on the lens element, a length of a shared edge portion is L₁, a length of a non-shared edge portion is L₂, and a ratio of L₁ to L₂ is 0.1 or more, for example, 0.5 or more.

In some implementation solutions, the ratio of L₁ to L₂ is 1 or more, for example, 2 or more, for example, 3 or more, for example, 5 or more, for example, 7 or more, for example, 10 or more, for example, 15 or more, or for example, 20 or more.

In some implementations, the lens element is a layered body.

In some implementations, the lens element is a multi-layer body.

In some implementations, the lens element is transparent.

In some implementations, a material of the lens element is plastic or glass.

In some implementations, the lens element contains a dye.

In some implementations, the lens element is a multi-layer body, and at least one layer of the multi-layer body contains a dye.

In some implementations, a surface of the lens element is provided with one or more layers of cover films. The cover film includes, for example, one or more of a hardening film and an anti-reflection film.

In some implementations, on one lens element, the insular region is adjacent to the base region.

In some implementations, on one lens element, the insular region and the base region do not overlap with each other.

In some implementations, the base region is formed into a region other than a region formed into an insular region.

In some implementation solutions, the lens element is a spectacle lens.

In some implementations, the lens element is a non-contact spectacle lens, that is, a spectacle lens that is not in contact with a cornea of a wearer when worn.

In some implementations, the lens element is a contact spectacle lens, that is, a spectacle lens that is in contact with a cornea of a wearer when worn.

In some implementation solutions, the first refractive power ranges from -10.00 D to 10.00 D, for example, from -10.00 D to 0 D, or for example, from 0 D to 10.00 D.

In some implementation solutions, the first refractive power ranges from -10.00 D to - 9.00 D, from -9.00 D to -8.00 D, from -8.00 D to -7.00 D, from -7.00 D to -6.00 D, from - 6.00 D to -5.00 D, from -5.00 D to -4.00 D, from -4.00 D to -3.00 D, from -3.00 D to -2.00 D, from -2.00 D to -1.00 D, from -1.00 D to 0.00 D, from 0.00 D to 1.00 D, from 1.00 D to 2.00 D, from 2.00 D to 3.00 D, from 3.00 D to 4.00 D, from 4.00 D to 5.00 D, from 5.00 D to 6.00 D, from 6.00 D to 7.00 D, from 7.00 D to 8.00 D, from 8.00 D to 9.00 D, or from 9.00 D to 10.00 D.

In some implementation solutions, the second refractive power ranges from -10.00 D to - 9.00 D, from -9.00 D to -8.00 D, from -8.00 D to -7.00 D, from -7.00 D to -6.00 D, from - 6.00 D to -5.00 D, from -5.00 D to -4.00 D, from -4.00 D to -3.00 D, from -3.00 D to -2.00 D, from -2.00 D to -1.00 D, from -1.00 D to 0.00 D, from 0.00 D to 1.00 D, from 1.00 D to 2.00 D, from 2.00 D to 3.00 D, from 3.00 D to 4.00 D, from 4.00 D to 5.00 D, from 5.00 D to 6.00 D, from 6.00 D to 7.00 D, from 7.00 D to 8.00 D, from 8.00 D to 9.00 D, or from 9.00 D to 10.00 D.

In some implementation solutions, a difference between the second refractive power and the first refractive power ranges from -10.00 D to -9.00 D, from -9.00 D to -8.00 D, from - 8.00 D to -7.00 D, from -7.00 D to -6.00 D, from -6.00 D to -5.00 D, from -5.00 D to -4.00 D, from -4.00 D to -3.00 D, from -3.00 D to -2.00 D, from -2.00 D to -1.00 D, from -1.00 D to 0.00 D, from 0.00 D to 1.00 D, from 1.00 D to 2.00 D, from 2.00 D to 3.00 D, from 3.00 D to 4.00 D, from 4.00 D to 5.00 D, from 5.00 D to 6.00 D, from 6.00 D to 7.00 D, from 7.00 D to 8.00 D, from 8.00 D to 9.00 D, or from 9.00 D to 10.00 D.

In some implementation solutions, the base region has a substantially consistent refractive power, that is, the refractive power substantially does not change with a change of a position on a surface of the base region.

In some implementation solutions, the base region has a refractive power that changes gently with a change of a position on a surface of the base region. The gentle change means that an absolute value of a change rate of the refractive power in any direction of the surface of the lens element is greater than 0.00 D/mm and less than 5.00 D/mm, for example, ranges from 0.5 D/mm to 1.00 D/mm, from 1.00 D/mm to 2.00 D/mm, from 2.00 D/mm to 3.00 D/mm, from 3.00 D/mm to 4.00 D/mm, or from 4.00 D/mm to 4.50 D/mm. In some implementation solutions, in a direction from the center to the edge of the lens element, the base region has a successively changing refractive power (a gradually positively increased refractive power or a gradually negatively decreased refractive power).

FIG. 16 shows a lens element according to some implementations of the present invention. As shown in the figure, the lens element includes a base region 55 and a plurality of insular regions 50. The base region 55 includes a prescription region 551 and a non-prescription region 552. The prescription region 551 has a prescription refractive power for correcting a refractive error of an eye. The non-prescription region 552 has a refractive power that is more positive or more negative than the prescription refractive power.

In some implementation solutions, a central region of the lens element may be configured to form the prescription region 551. The prescription region has a function of correcting the refractive error of the eye.

In some implementation solutions, a peripheral region of the lens element may be configured to form a non-prescription region, and the non-prescription region may have a refractive power other than the refractive power for correcting the refractive error of the eye, for example, a more positive refractive power or a more negative refractive power. The non-prescription region is, for example, a thinning region. The thinning region makes the edge of the lens thinner and improves the aesthetics of the lens. The non-prescription region may also include an out-of-focus region, and the out-of-focus region has a function of inhibiting the development of a refractive error.

In some implementation solutions, the plurality of insular regions 50 are located between the prescription region 551 and the non-prescription region 552.

In some implementation solutions, the insular region is defined as a region further having the following feature: a region with a size of 3 mm or less in at least one direction.

In some implementation solutions, a region with the following feature is not an insular region: a region with a size of 3 mm × 3 mm or more in at least one set of mutually perpendicular directions.

In some implementation solutions, the size of the insular region is measured based on a border (edge) between the insular region and an adjacent region.

In some implementation solutions, an abrupt change in refractive power forms a border (edge) between the insular region and an adjacent base region or insular region.

In some implementation solutions, the insular region is configured to have an abrupt change in refractive power with an adjacent base region or insular region.

In some implementation solutions, an abrupt change in refractive power means that an absolute value of a change rate of the refractive power in any direction of the surface of the lens element reaches 5.00 D/mm or more.

In some implementation solutions, an abrupt change in refractive power ranges, for example, from 5.00 D/mm to 6.00 D/mm, from 6.00 D/mm to 7.00 D/mm, from 7.00 D/mm to 8.00 D/mm, from 8.00 D/mm to 9.00 D/mm, or from 9.00 D/mm to 10.00 D/mm. For example, a change in refractive power reaches 1.00 D or more at a distance of 0.2 mm. In another example, a change in refractive power reaches 2.50 D or more at a distance of 0.5 mm.

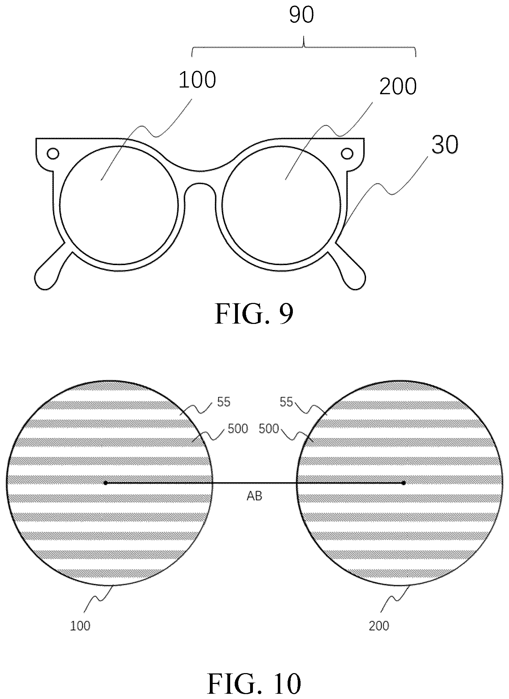

FIG. 9 is an abstract schematic diagram of a pair of spectacles according to some implementations of the present invention. As shown in the figure, this application provides a pair of spectacles, including a spectacle frame 30 and a lens element 90 mounted on the spectacle frame 30, where the lens element 90 is any lens element described above.

As shown in FIG. 9, in some implementation solutions, the spectacles include a spectacle frame 30 and a first lens element 100 and a second lens element 200 that are mounted on the spectacle frame 30; the first lens element 100 includes a base region 55 and a plurality of straight-strip-shaped insular region arrays 501, and the plurality of straight-strip-shaped insular region arrays 501 are spaced parallel to each other; the plurality of straight-strip-shaped insular region arrays 501 are parallel to a connection line AB between optical centers of the first lens element and the second lens element; and the second lens element 200 includes a base region 55 and a plurality of straight-strip-shaped insular region arrays 502, the plurality of straight-strip-shaped insular region arrays 502 are spaced parallel to each other, and the plurality of straight-strip-shaped insular region arrays 502 are parallel to the connection line AB between the optical centers of the first lens element and the second lens element. The optical lens based on the foregoing solution can bring a better visual experience to the wearer. In scenes of daily life, horizontal lines are most common, and are most coordinated with the wearer's visual experience. Especially in a daily reading process, a direction of text arrangement is also usually horizontal.

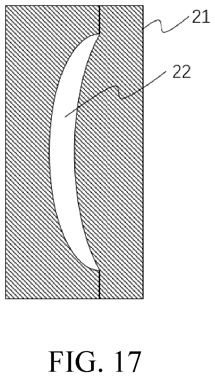

FIG. 17 is a schematic diagram of a mold according to the present invention. As shown in the figure, the mold 21 has a mold cavity 22, and a shape of the mold cavity 22 is configured to correspond to a shape of any lens element described above. The corresponding means that any lens element described above can be obtained by casting the lens element by using the above mold.

### Experimental data

The following further describes advantages of the technical solutions of this application with reference to specific experimental data. It should be noted that the accompanying drawings mentioned in the following embodiments are all abstract schematic diagrams, and are merely schematic diagrams for conceptualizing patterns of insular regions, but not strictly drawings. To help readers understand, operations such as enlarging, shrinking, partially highlighting, and partially simplifying are performed on some structures of the lens elements in these schematic diagrams. Therefore, the specific sizes and distribution parameters of the insular regions of the lens element are still subject to the foregoing literal descriptions and the specific definitions in Table 1.

### Embodiment 1

FIG. 9 is an abstract schematic diagram of a pair of spectacles. FIG. 10 is an abstract schematic diagram of a first lens element and a second lens element of spectacles.

As shown in FIG. 9 and FIG. 10, the spectacles include a spectacle frame 30 and a first lens element 100 and a second lens element 200 that are mounted on the spectacle frame 30. The first lens element 100 is the same as the second lens element 200. The first lens element 100 and the second lens element 200 are in a shape of a circle with a diameter of 35 mm. Each of the first lens element 100 and the second lens element 200 includes a base region 55 and a plurality of insular region arrays 500.

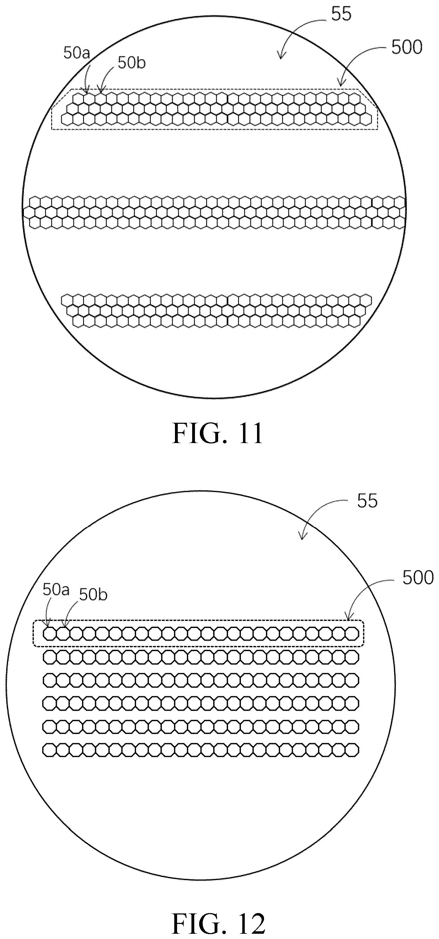

FIG. 11 is an abstract schematic diagram of a distribution pattern of insular regions on a lens element in Embodiment 1. As shown in FIG. 11, each insular region array 500 is in a straight strip shape. Two ends of each insular region array 500 respectively extend to two edges of a first lens element 100. A plurality of straight-strip-shaped insular region arrays 500 are spaced parallel to each other. A width of each insular region array 500 is 3.25 mm, and a spacing distance between adjacent insular region arrays 500 is 4 mm. Each insular region array 500 is parallel to a connection line AB between optical centers of the first lens element and a second lens element. A region outside the insular region arrays 500 is a base region 55.

A structure of the insular region array 500 is shown in FIG. 5. A plurality of insular regions (50a, 50b, 50c, 50d, and 50e) are densely laid on the insular region array 500. Adjacent insular regions have a shared edge.

The base region 55 has a prescription refractive power (first refractive power) for correcting a refractive error of an eye, and the first refractive power is 0.00 D. The insular regions (50a, 50b, 50c, 50d, and 50e) each have a refractive power (second refractive power) for inhibiting development of the refractive error of the eye, the second refractive power is 7.5 D, and the second refractive power focuses an image at a position other than a retina of the eye to inhibit the development of the refractive error of the eye.

For parameters of the lens elements (the first lens element is consistent with the second lens element), refer to Table 1. These parameters include, for example, a quantity of insular regions, a proportion of a total area of the insular regions on the lens, an area mm² of the base region on the lens, a length L₁/mm of a shared edge of insular regions, a length L₂/mm of non-shared edges of insular regions, a total length (L₁ + L₂) mm of edges of the insular regions, a ratio of L₁ to L₂, and the like.

### Embodiment 2

Embodiment 2 provides a pair of spectacles with a structure similar to that in Embodiment 1. A difference between Embodiment 2 and Embodiment 1 lies in a distribution pattern of insular regions on the lens element. In particular, the distribution of the insular regions on the insular region array is more dispersed, and there are fewer shared edges between the insular regions. For parameters of the lens elements, refer to Table 1.

### Embodiment 3

Embodiment 3 provides a pair of spectacles with a structure similar to that in Embodiment 1. A difference between Embodiment 3 and Embodiment 1 lies in a shape and a distribution pattern of insular regions on the lens element.

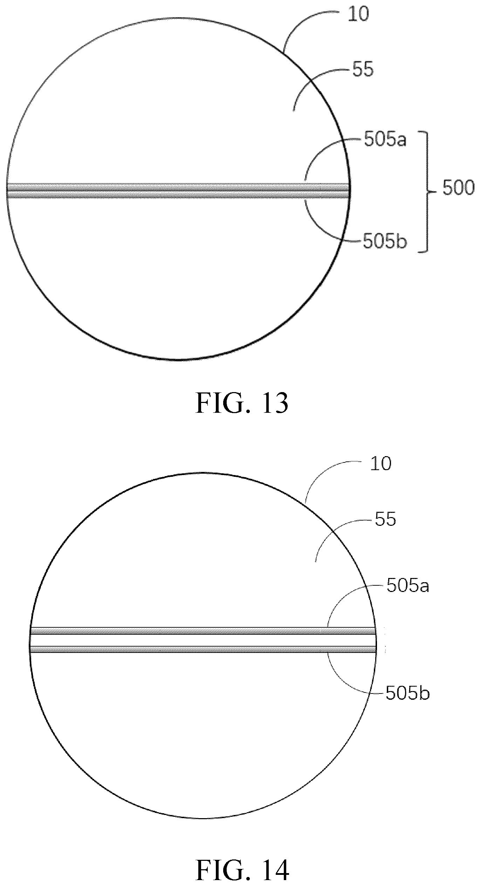

FIG. 13 is an abstract schematic diagram of distribution of insular regions on a lens element. As shown in the figure, the insular regions (505a and 505b) in Embodiment 3 are in a straight strip shape. The insular regions (505a and 505b) in the straight strip shape extend from one end of the lens element 10 to the other end. A width of the insular regions (505a and 505b) in the straight strip shape is 1 mm. Refractive surfaces of the insular regions (505a and 505b) in the straight strip shape are formed into a cylindrical convex shape facing an object side relative to a surface shape of a base region 55, and a cylindrical bus direction is a length direction of the insular regions (505a and 505b). The base region 55 has a prescription refractive power (first refractive power) for correcting a refractive error of an eye, and the first refractive power is 0.00 D. The insular regions (505a and 505b) each have a refractive power (second refractive power) for inhibiting development of the refractive error of the eye, the second refractive power is + 7.5 D, and the second refractive power focuses an image at a position other than a retina of the eye to inhibit the development of the refractive error of the eye.

As shown in FIG. 13, a pair of adjacent insular regions (505a and 505b) form an insular region array 500. The adjacent insular regions (505a and 505b) have a shared long edge.

Although FIG. 13 shows only one insular region array 500, a plurality of insular region arrays 500 are actually distributed on the first lens element and the second lens element in Embodiment 3. The insular region arrays 500 are arranged at equal intervals parallel to each other. Each insular region array 500 is parallel to a connection line between optical centers of the first lens element and the second lens element of the spectacles. For parameters of the lens elements, refer to Table 1.

### Comparative Example 1

Comparative Example 1 provides a pair of spectacles with a structure similar to that in Embodiment 1. A difference between Comparative Example 1 and Embodiment 1 lies in a structure of the insular region array, and in particular, a distribution pattern of the insular regions on the insular region array.

A plurality of insular regions are distributed apart on the structure of the insular region array of Comparative Example 1, and adjacent insular regions do not have a shared edge. A diameter of the insular regions is 1.3 mm, and a spacing distance between adjacent insular regions is 0.53 mm. A distribution density of insular regions (a ratio of an area of the insular regions to a total area) is 42.2%. The insular regions are evenly distributed on the entire surface of the lens. A region outside the insular regions is a base region.

### Comparative Example 2

Comparative Example 2 provides a pair of spectacles with a structure similar to that in Embodiment 1. A difference between Comparative Example 2 and Embodiment 1 lies in a structure of the insular region array, and in particular, a distribution pattern of the insular regions on the insular region array.

As shown in FIG. 12, the distribution of the insular regions in Comparative Example 2 is more dispersed. Although there is a shared edge between some adjacent insular regions (50a and 50b), a proportion of the shared edge is significantly lower than a proportion of non-shared edges. In other words, a proportion of the length L₁ of the shared edge of the insular regions is lower, and a proportion of the length L₂ of the non-shared edges of the insular regions is higher. Parameters of the lens elements are shown in Table 1.

### Comparative Example 3

Comparative Example 3 provides a pair of spectacles with a structure similar to that in Embodiment 3. A difference between Comparative Example 3 and Embodiment 3 lies in a structure of the insular region array, and in particular, a distribution pattern of the insular regions on the insular region array.

FIG. 14 is an abstract schematic diagram of distribution of insular regions on a lens element. As shown in the figure, a plurality of insular regions (505a and 505b) are distributed apart on the lens element of Comparative Example 3. Although FIG. 14 shows only one pair of insular regions (505a and 505b), a plurality of similar insular regions (505a and 505b) are actually distributed on the first lens element and the second lens element of Comparative Example 3.

The base region 55 has a prescription refractive power (first refractive power) for correcting a refractive error of an eye, and the first refractive power is 0.00 D. The insular regions (505a and 505b) each have a refractive power (second refractive power) for inhibiting the growth of the refractive error of the eye, the second refractive power is 7.5 D, and the second refractive power focuses an image at a position other than a retina of the eye to inhibit the development of the refractive error of the eye.

The insular regions (505a and 505b) are in a straight strip shape. The adjacent insular regions (505a and 505b) do not have a shared edge. The plurality of insular regions (505a and 505b) in the straight strip shape are spaced parallel to each other. A width of the insular regions (505a and 505b) in the straight strip shape is 1 mm. A spacing distance between adjacent insular regions in the straight strip shape is 1 mm. Parameters of the lens elements are shown in Table 1.

### Blank example

A pair of spectacles is provided. The spectacles are equipped with an optical lens group, including a first lens element and a second lens element. The first lens element has only a base region, and the base region has a refractive power of 0. The second lens element has only a base region, and the base region has a refractive power of 0.

### Visual clarity test:

The wearer wears the spectacles in Embodiments 1 to 3 and Comparative Examples 1 to 2 respectively, and is subject to a sight test according to the GB/T 11533-2011 standard at a distance of 5 meters from an eye chart, and the wearer is instructed to observe the eye chart. The results are shown in Table 1 below. The wearer's naked eye sight is 5.3.

**Table 1**

| | Embodiment | | | Comparative Example | | |
|---|---|---|---|---|---|---|
| | 1 | 2 | 3 | 1 | 2 | 3 |
| Area of a lens element mm² | 962 | 962 | 962 | 962 | 962 | 962 |
| Total area of a base region mm² | 556 | 556 | 481 | 556 | 556 | 481 |
| Total area of insular regions mm² | 406 | 406 | 481 | 406 | 406 | 481 |
| Proportion of an area of insular regions | 42.2% | 42.2% | 50% | 42.2% | 42.2% | 50% |
| Quantity of insular regions | 354 | 346 | 17 | 306 | 324 | 17 |
| L₁/mm | 536 | 450 | 189 | 0 | 211 | 0 |
| L₂/mm | 321 | 471 | 379 | 1250 | 884 | 757 |
| L₁ + L₂/mm | 857 | 921 | 568 | 1250 | 1095 | 757 |
| L₁:L₂ | 1.67 | 0.95 | 0.5 | 0 | 0.24 | 0 |
| Sight value | 5.3 | 5.2 | 5.2 | 5.0 | 5.0 | 5.0 |

| | | | | | | |
|---|---|---|---|---|---|---|
| * L₁ is a total length of shared edges of the insular regions; and L₂ is a total length of non-shared edges of the insular regions | | | | | | |

It can be learned from the foregoing table that:
(1) The spectacles in the blank example do not have any insular region for focusing an image at a position other than the retina of the eye to inhibit the development of the refractive error of the eye, and the sight of the wearer is not affected by any insular region. Therefore, the wearer wearing the spectacles in the blank example exhibits a sight value of 5.3.
(2) The spectacles of Comparative Examples 1 and 3 have insular regions that focus an image at a position other than the retina of the eye to inhibit the development of the refractive error of the eye. The insular regions are spaced apart from each other and self-contained from each other, each insular region has a circle of edges, and a proportion of non-shared edges is high (0 ≤ L₁/L₂ < 0.3), which affects the visual clarity of the wearer. After wearing the spectacles of Comparative Examples 1 and 3, the sight of the wearer is only 5.0, and the sight value is not high.
(3) The spectacles in Embodiments 1 to 3 also have an insular region for focusing an image at a position other than the retina of the eye to inhibit the development of the refractive error of the eye. Because some insular regions have a shared edge, without reducing a quantity of insular regions, a proportion of non-shared edges on the lens elements of Embodiments 1 and 2 is significantly lower than that of Comparative Example 1, and a proportion of non-shared edges on the lens element of Embodiment 3 is significantly lower than that of Comparative Example 3. The proportion of shared edges of the insular regions in Embodiments 1 to 3 is high (L₁/L₂ ≥ 0.3), the visual clarity of the wearer is improved, and the sight of the wearer after wearing the spectacles in Embodiments 1 and 2 ranges from 5.2 to 5.3, which shows a substantial visual improvement compared with Comparative Examples 1 and 3 (sight value 5.0).
(4) Although Comparative Example 2 has a shared edge of insular regions, a ratio of a length of the shared edge to a length of non-shared edges of the insular regions L₁:L₂ is excessively low, which is only 0.24, and does not reach the threshold of 0.3. In this case, the wearer cannot substantially feel that the visual clarity is improved, and the wearer's sight after wearing the spectacles in Comparative Example 2 is 5.0, which does not show a substantial visual improvement compared with Comparative Example 1 (sight value 5.0).

The foregoing results indicate that the lens element of the present invention can provide the wearer with a good sight value and a good visual function while inhibiting the development of the refractive error of the eye.

Still other implementation solutions of the present invention are further described in detail below with reference to embodiments. However, those skilled in the art may understand that the following embodiments are only used for describing the present invention and should not be construed as a limitation to the scope of the present invention.

As used herein (in the specification), "around", "about", or "approximately" generally means within 20%, preferably within 10%, and more preferably within 5% of a given value or range. Numerical quantities given herein are approximate, implying the term "around", "about", or "approximately" (if such a term is not expressly stated).

In the present invention, the term "part" means greater than 0% and less than 100%, for example, 1% to 10%, 10% to 20%, 20% to 30%, 30% to 40%, 40% to 50%, 50% to 60%, 60% to 70%, 70% to 80%, 80% to 90%, or 90% to 99%.

Similarly, "a" or "an" is used to describe elements and compositions of this application. This is merely for brevity and general meaning of the present invention. Unless the meaning is clearly expressed in another manner, the description should be understood as including one or at least one, and the singular also includes the plural.

It should be understood that orientation or position relationships indicated by the terms such as "midpoint", "longitudinal", "lateral", "front", "back", "left", "right", "vertical", "horizontal", "top", "bottom", "inside", and "outside" are based on orientation or position relationships shown in the accompanying drawings, and are used only for ease and brevity of illustration and description of the present invention, rather than indicating or implying that the mentioned apparatus or element needs to have a particular orientation or needs to be constructed and operated in a particular orientation. Therefore, such terms should not be construed as limiting the protected content of the present invention.

The term "at least partially overlaps with" is understood as follows: That the region A and the region B at least partially overlap includes the following cases: an intersection exists between the region A and the region B (A ∩ B ≠ 0), the region A is a subset of the region B (A⊆B), the region B is a subset of the region A (B⊆A), and the region A is equal to the region B (A = B). When the region A and the region B at least partially overlap, a ratio of an area of an overlapping region of the region A and the region B to an area of the region A ranges, for example, from 1% to 10%, from 10% to 20%, from 20% to 30%, from 30% to 40%, from 40% to 50%, from 50% to 60%, from 60% to 70%, from 70% to 80%, from 80% to 90%, or from 90% to 100%; and a ratio of the area of the overlapping region to an area of the region B ranges, for example, from 1% to 10%, from 10% to 20%, from 20% to 30%, from 30% to 40%, from 40% to 50%, from 50% to 60%, from 60% to 70%, from 70% to 80%, from 80% to 90%, or from 90% to 100%.

The term "completely overlap" is understood as follows: That the region A and the region B completely overlap means that the region A and the region B are equal (A = B) or are subsets of each other.

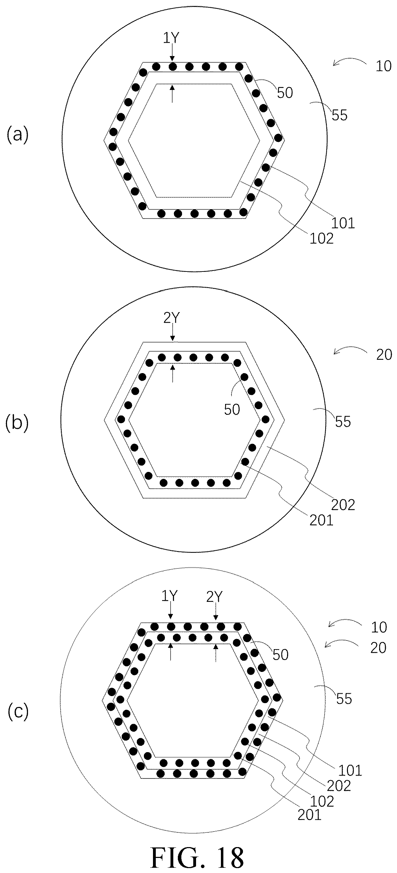

(a) of FIG. 18 is a schematic diagram of a first lens element according to some embodiments of this application. (b) of FIG. 18 is a schematic diagram of a second lens element according to some embodiments of this application. (c) of FIG. 18 is a schematic diagram of overlapping between a first lens element and a second lens element when being placed parallel to each other and coaxially according to some embodiments of this application.

Referring to (a) to (c) of FIG. 18, in some embodiments, this application provides an optical lens group, including a first lens element 10 and a second lens element 20.

Referring to (a) of FIG. 18, the first lens element 10 includes: a base region 55, where the base region 55 has a base refractive power; and insular regions 50, where the insular region 50 has a refractive power different from the base refractive power and has a function of focusing an image at a position other than a retina of the eye to inhibit development of the refractive error of the eye; a 1Y^{th} optical region is arranged near an optical center of the first lens element 10, the 1Y^{th} optical region includes a first region A 101 and a first region B 102, a plurality of self-contained insular regions 50 are arranged in the first region A 101, the first region B 102 is substantially formed by the base region 55 or a plurality of self-contained insular regions 50 are distributed in the first region B 102, and the first region B 102 has a lower distribution density of insular regions 50 than the first region A 101.

Referring to (b) of FIG. 18, the second lens element 20 includes: a base region 55, having a base refractive power; and insular regions 50, where the insular region 50 has a refractive power different from the base refractive power and has a function of focusing an image at a position other than a retina of the eye to inhibit development of the refractive error of the eye; and a 2Y^{th} optical region is arranged near an optical center of the second lens element 20, the 2Y^{th} optical region includes a second region A 201 and a second region B 202, a plurality of self-contained insular regions 50 are arranged in the second region A 201, the second region B 202 is substantially formed by the base region 55 or a plurality of self-contained insular regions 50 are distributed in the second region B 202, and the second region B 202 has a lower distribution density of insular regions 50 than the second region A 201.

Referring to (c) of FIG. 18, the first lens element 10 and the second lens element 20 are configured in such a way that when the first lens element 10 and the second lens element 20 are placed parallel to each other and coaxially, at least one relative position exists for the first lens element 10 and the second lens element 20, to make the two lens elements meet a specific relationship, and the specific relationship includes:
(1) a projection of the first region A 101 of the first lens element 10 on the second lens element 20 at least partially overlaps with the second region B 202 of the second lens element 20; and
(2) a projection of the second region A 201 of the second lens element 20 on the first lens element 10 at least partially overlaps with the first region B 102 of the first lens element 10.

It should be noted that, the state in which the first lens element 10 and the second lens element 20 are coaxially placed is not a use state of the first lens element 10 and the second lens element 20, but is intended to reflect a specific mutual correspondence between the optical feature of the first lens element 10 and the optical feature of the second lens element 20 through such a specific relationship. When the first lens element 10 and the second lens element 20 are placed parallel to each other and coaxially, this specific mutual correspondence can be presented very clearly.

When the first lens element 10 and the second lens element 20 are respectively worn on the left eye and the right eye of a person, the beneficial effects of the optical lens group in the foregoing embodiments are presented in the following manner:
(1) The first region 101 of the first lens element 10 has a function of inhibiting development of a refractive error of the left eye, but weakens visual clarity of the left eye in this region to a certain extent. However, the second region B 202 of the second lens element 20 has a lower distribution density of insular regions 50 than the second region A 201, and the projection of the first region A 101 of the first lens element 10 on the second lens element 20 at least partially overlaps with the second region B 202 of the second lens element 20. Therefore, it may be inferred that the second region B 202 having an at least partially overlapping corresponding positional relationship with the first region A 101 has relatively high visual clarity. Simply speaking, it may be understood that the region where the visual clarity of the left eye is weakened is enhanced to a certain extent in the corresponding region of the right eye.
(2) The second region 201 of the second lens element 20 has a function of inhibiting development of a refractive error of the right eye, but weakens visual clarity of the right eye in this region to a certain extent. However, the first region B 102 of the first lens element 10 has a lower distribution density of insular regions 50 than the first region A 101, and the projection of the second region A 201 of the second lens element 20 on the first lens element 10 at least partially overlaps with the first region B 102 of the first lens element 10. Therefore, it may be inferred that the first region B 102 having an at least partially overlapping corresponding positional relationship with the second region A 201 has relatively high visual clarity. Simply speaking, it may be understood that the region where the visual clarity of the right eye is weakened is enhanced to a certain extent in the corresponding region of the left eye.

According to the principle of vision production, an observer sees objects with an angle difference respectively in the left and right eyes, and a world felt by the brain is a result of mixing the two objects. Therefore, a region in which the clarity of the left eye is weakened is offset in the right eye, a region in which the clarity of the right eye is weakened is offset in the left eye, and vision of the left eye and vision of the right eye are in a unique complementary relationship. Finally, signals received by the left and right eyes are integrated and fed back to the brain, and the brain can still obtain relatively clear and complete information of a target object. Therefore, the lens group of this application ingeniously uses a capability of the brain to comprehensively use visual signals of the left and right eyes while inhibiting development of refractive errors of the left and right eyes, to provide the wearer with relatively clear and complete information of the target object.

In some implementations, in a forward viewing state, a line of sight passes through a substantially central portion of the lens element to view an object. Therefore, the object is viewed by using a beam passing through a plurality of insular regions dispersedly configured in a manner of being included in the base region and a beam passing through the base region. As a result, the lens element has the following effect: While an image of the object formed due to the first refractive power is visually discerned, the development of myopia is inhibited through the image formed in front of the retina due to the second refractive power.

In some implementations, when the eye moves, the line of sight deviates from the central portion and passes through a peripheral portion. However, the peripheral portion is a region with a prescription-based refractive power (a region with the first refractive power). Therefore, an object can be discerned very well, and even if the eyes move, the wearer hardly feels discomfort. Therefore, the function of inhibiting the development of the refractive error of the eye can be exhibits while ensuring sufficient visibility and a good wearing feeling.

In some implementations, in a structure of the first lens element/the second lens element, the base region as a whole has a function of focusing an image on a retina of an eye. However, for example, in a case of forming a lens element that inhibits the development of myopia, the insular region is made of a material having a function of focusing an image at a point in front of the retina of the eye. Therefore, when a patient views an object by using the lens element that inhibits the development of myopia, an image of the object is formed on the retina and an image is formed in front of the retina. In other words, the lens element has the following effect: While an image of the object formed by using the first refractive power is visually discerned, the development of myopia is inhibited through the image obtained in front of the retina by using a refractive power other than the first refractive power. Long sightedness may be the same case except for the following content: In the case of hypermetropia, the image is focused on a rear side of the retina of the eye through insular regions.

In some implementation solutions, the plurality of self-contained insular regions means that the plurality of insular regions respectively have self-contained optical centers. In view of the fact that the present invention belongs to the optical field, the term self-contained should also be understood from an optical perspective, that is, understood as having a self-contained optical center.

In some implementation solutions, in the plurality of self-contained insular regions, some insular regions and adjacent insular regions have a shared edge (that is, are conjoined to each other).

In some implementation solutions, in the plurality of self-contained insular regions, some insular regions and adjacent insular regions have no shared edge (that is, are spaced apart from each other).

In some implementation solutions, in the plurality of self-contained insular regions, some insular regions and adjacent insular regions have a shared edge (that is, are conjoined to each other), and some insular regions and adjacent insular regions have no shared edge (that is, are spaced apart from each other).

In some implementation solutions, the first lens element and/or the second lens element is any lens element recorded in this application, for example, any lens element recorded in the first aspect of this application.

In some implementation solutions, the first lens element and/or the second lens element includes:
a base region, where the base region includes a prescription region for correcting a refractive error of an eye; and
a plurality of insular regions, where the insular regions include regions for inhibiting development of the refractive error of the eye,
where at least some of the insular regions are adjacent to each other and have a shared edge.

In some implementation solutions, for edges of all the insular regions on the lens element, a length of a shared edge portion is L₁, a length of a non-shared edge portion is L₂, and a ratio of L₁ to L₂ is 0.1 or more.

In some implementation solutions, for edges of all the insular regions on the lens element, a length of a shared edge portion is L₁, a length of a non-shared edge portion is L₂, and a ratio of L₁ to L₂ is 0.2 or more.

In some implementation solutions, for edges of all the insular regions on the lens element, a length of a shared edge portion is L₁, a length of a non-shared edge portion is L₂, and a ratio of L₁ to L₂ is 0.3 or more.

In some implementation solutions, some or all of edges of one or more insular regions are shared edges.

In some implementation solutions, some or all of edges of one or more insular regions are non-shared edges.

In some implementation solutions, a shared edge of an insular region is a junction of the insular region and an adjacent insular region.

In some implementation solutions, a non-shared edge of an insular region is a junction of the insular region and the base region.

In some implementation solutions, insular regions having a shared edge are fused with each other at the shared edge.

In some implementation solutions, no base region exists between adjacent insular regions having a shared edge.

In some implementation solutions, a base region exists between adjacent insular regions having no shared edge.

In some implementation solutions, the insular regions have optical centers self-contained from each other respectively.

In some implementation solutions, one or more insular regions are partially or completely surrounded by one or more other insular regions.

In some implementation solutions, one or more insular regions are microlenses.

In some implementation solutions, that the first region B 102 has a lower distribution density of insular regions 50 than the first region A 101 means that
the distribution density of insular regions on each of the first region B 102 and the first region A 101 is greater than zero, but the first region B 102 has a lower distribution density of insular regions 50 than the first region A 101; or
the distribution density of insular regions on the first region B 102 is zero, and the distribution density of insular regions on the first region A 101 is greater than zero.

In some implementation solutions, that the second region B 202 has a lower distribution density of insular regions 50 than the second region A 201 means that
the distribution density of insular regions on each of the second region B 202 and the second region A 201 is greater than zero, but the second region B 202 has a lower distribution density of insular regions 50 than the second region A 201; or
the distribution density of insular regions on the second region B 202 is zero, and the distribution density of insular regions on the second region A 201 is greater than zero.

In some implementation solutions, the base region has a refractive power based on a prescription for correcting a refractive error of an eye.

In some implementation solutions, the refractive power of the base region ranges from - 10.00 D to 10.00 D, for example, from -10.00 D to 0 D, or for example, from 0 D to 10.00 D.

In some implementation solutions, the refractive power of the base region ranges from - 10.00 D to -9.00 D, from -9.00 D to -8.00 D, from -8.00 D to -7.00 D, from -7.00 D to -6.00 D, from -6.00 D to -5.00 D, from -5.00 D to -4.00 D, from -4.00 D to -3.00 D, from -3.00 D to -2.00 D, from -2.00 D to -1.00 D, from -1.00 D to 0.00 D, from 0.00 D to 1.00 D, from 1.00 D to 2.00 D, from 2.00 D to 3.00 D, from 3.00 D to 4.00 D, from 4.00 D to 5.00 D, from 5.00 D to 6.00 D, from 6.00 D to 7.00 D, from 7.00 D to 8.00 D, from 8.00 D to 9.00 D, or from 9.00 D to 10.00 D.

In some implementation solutions, the refractive power of the insular region ranges from -10.00 D to -9.00 D, from -9.00 D to -8.00 D, from -8.00 D to -7.00 D, from -7.00 D to - 6.00 D, from -6.00 D to -5.00 D, from -5.00 D to -4.00 D, from -4.00 D to -3.00 D, from - 3.00 D to -2.00 D, from -2.00 D to -1.00 D, from -1.00 D to 0.00 D, from 0.00 D to 1.00 D, from 1.00 D to 2.00 D, from 2.00 D to 3.00 D, from 3.00 D to 4.00 D, from 4.00 D to 5.00 D, from 5.00 D to 6.00 D, from 6.00 D to 7.00 D, from 7.00 D to 8.00 D, from 8.00 D to 9.00 D, or from 9.00 D to 10.00 D.

In some implementation solutions, a difference between the refractive power of the insular region and the refractive power of the base region ranges from -10.00 D to -9.00 D, from - 9.00 D to -8.00 D, from -8.00 D to -7.00 D, from -7.00 D to -6.00 D, from -6.00 D to -5.00 D, from -5.00 D to -4.00 D, from -4.00 D to -3.00 D, from -3.00 D to -2.00 D, from -2.00 D to -1.00 D, from -1.00 D to 0.00 D, from 0.00 D to 1.00 D, from 1.00 D to 2.00 D, from 2.00 D to 3.00 D, from 3.00 D to 4.00 D, from 4.00 D to 5.00 D, from 5.00 D to 6.00 D, from 6.00 D to 7.00 D, from 7.00 D to 8.00 D, from 8.00 D to 9.00 D, or from 9.00 D to 10.00 D.

In some implementation solutions, the base region has a substantially consistent refractive power, that is, the refractive power substantially does not change with a change of a position on a surface of the base region.

In some implementation solutions, the base region has a refractive power that changes gently with a change of a position on a surface of the base region. The gentle change means that an absolute value of a change rate of the refractive power in any direction of the surface of the lens element is greater than 0.00 D/mm and less than 5.00 D/mm, for example, ranges from 0.5 D/mm to 1.00 D/mm, from 1.00 D/mm to 2.00 D/mm, from 2.00 D/mm to 3.00 D/mm, from 3.00 D/mm to 4.00 D/mm, or from 4.00 D/mm to 4.50 D/mm. In some implementation solutions, in a direction from the center to the edge of the lens element, the base region has a successively changing refractive power (a gradually positively increased refractive power or a gradually negatively decreased refractive power).

In a specific implementation, a surrounding region of the base region has a more positive refractive power than a central region of the base region. In some implementation solutions, a surrounding region of the base region may be used to form an out-of-focus region.

In some implementation solutions, the insular region is configured to have an abrupt change in refractive power with an adjacent base region. an abrupt change in refractive power forms a junction of the insular region and an adjacent base region.

In some implementation solutions, an abrupt change in refractive power means that an absolute value of a change rate of the refractive power in any direction of the surface of the lens element reaches 5.00 D/mm or more. An abrupt change in refractive power ranges, for example, from 5.00 D/mm to 6.00 D/mm, from 6.00 D/mm to 7.00 D/mm, from 7.00 D/mm to 8.00 D/mm, from 8.00 D/mm to 9.00 D/mm, or from 9.00 D/mm to 10.00 D/mm. For example, a change in refractive power reaches 1.00 D or more at a distance of 0.2 mm. In another example, a change in refractive power reaches 2.50 D or more at a distance of 0.5 mm.

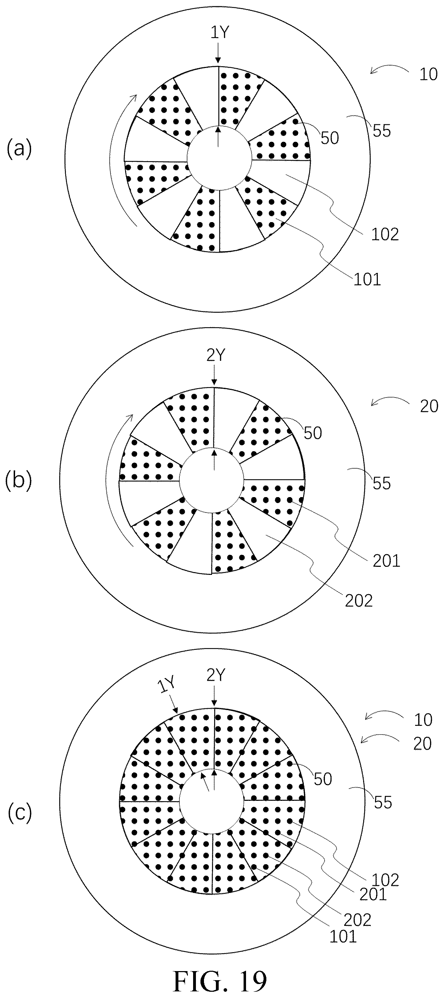

(a) of FIG. 19 is a schematic diagram of a first lens element according to some embodiments of this application. (b) of FIG. 19 is a schematic diagram of a second lens element according to some embodiments of this application. (c) of FIG. 19 is a schematic diagram of overlapping between a first lens element and a second lens element when being placed parallel to each other and coaxially according to some embodiments of this application.

Referring to (a) of FIG. 19, in some implementations, a plurality of first regions A 101 spaced apart from each other are arranged in a 1Y^{th} optical area of a first lens element 10, and a plurality of first regions B 102 spaced apart from each other are arranged in the 1Y^{th} optical area.

Referring to (a) of FIG. 19, in some implementations, a plurality of first regions A 101 spaced apart from each other and a plurality of first regions B 102 spaced apart from each other in the 1Y^{th} optical region are alternately arranged in a circumferential direction (in a direction around an optical center). In some implementation solutions, a shape of each first region A 101 is an annular sector (annular sector), and a shape of each first region B 102 is an annular sector. A plurality of first regions A 101 spaced apart from each other and a plurality of first regions B 102 spaced apart from each other are alternately arranged in a circumferential direction and combined to form a ring shape.

Referring to (b) of FIG. 19, in some implementations, a plurality of second regions A 201 spaced apart from each other are arranged in a 2Y^{th} optical area of a second lens element 20, and a plurality of second regions B 202 spaced apart from each other are arranged in the 2Y^{th} optical area.

Referring to (b) of FIG. 19, in some implementations, a plurality of second regions A 201 spaced apart from each other and a plurality of second regions B 202 spaced apart from each other in the 2Y^{th} optical region are alternately arranged in a circumferential direction (in a direction around an optical center). In some implementation solutions, a shape of each second region A 201 is an annular sector (annular sector), and a shape of each second region B 202 is an annular sector. A plurality of second regions A 201 spaced apart from each other and a plurality of second regions B 202 spaced apart from each other are alternately arranged in a circumferential direction and combined to form a ring shape.

Referring to (c) of FIG. 19, when the first lens element 10 and the second lens element 20 are placed parallel to each other and coaxially, at least one relative position exists for the first lens element 10 and the second lens element 20, to make the two lens elements meet a specific relationship, and the specific relationship includes:
(1) a projection of the first region A 101 of the first lens element 10 on the second lens element 20 at least partially overlaps with the second region B 202 of the second lens element 20; and
(2) a projection of the second region A 201 of the second lens element 20 on the first lens element 10 at least partially overlaps with the first region B 102 of the first lens element 10.

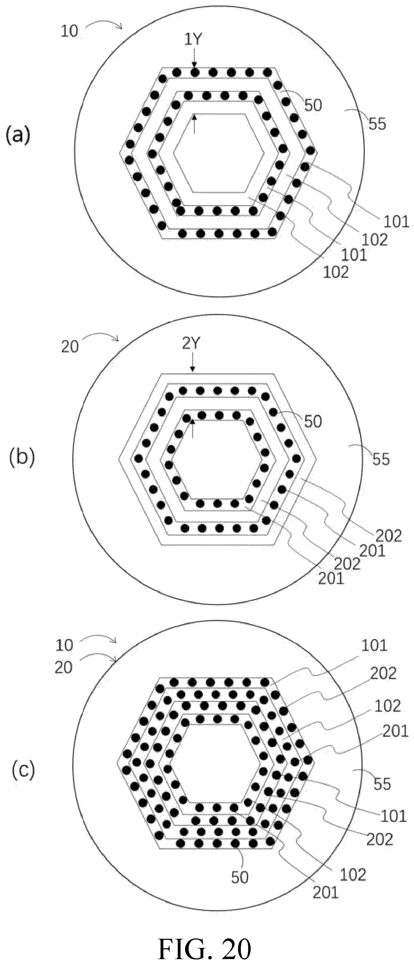

(a) of FIG. 20 is a schematic diagram of a first lens element according to some embodiments of this application. (b) of FIG. 20 is a schematic diagram of a second lens element according to some embodiments of this application. (c) of FIG. 20 is a schematic diagram of overlapping between a first lens element and a second lens element when being placed parallel to each other and coaxially according to some embodiments of this application.

Referring to (a) of FIG. 20, in some implementations, a plurality of first regions A 101 spaced apart from each other and a plurality of first regions B 102 spaced apart from each other in the 1Y^{th} optical region are alternately arranged in a radial direction (in a direction from the center to the edge).

Referring to (b) of FIG. 20, in some implementations, a plurality of second regions A 201 spaced apart from each other and a plurality of second regions B 202 spaced apart from each other in the 2Y^{th} optical region are alternately arranged in a radial direction (in a direction from the center to the edge).

Referring to (c) of FIG. 20, when the first lens element 10 and the second lens element 20 are placed parallel to each other and coaxially, at least one relative position exists for the first lens element 10 and the second lens element 20, to make the two lens elements meet a specific relationship, and the specific relationship includes:
(1) a projection of the first region A 101 of the first lens element 10 on the second lens element 20 at least partially overlaps with the second region B 202 of the second lens element 20; and
(2) a projection of the second region A 201 of the second lens element 20 on the first lens element 10 at least partially overlaps with the first region B 102 of the first lens element 10.

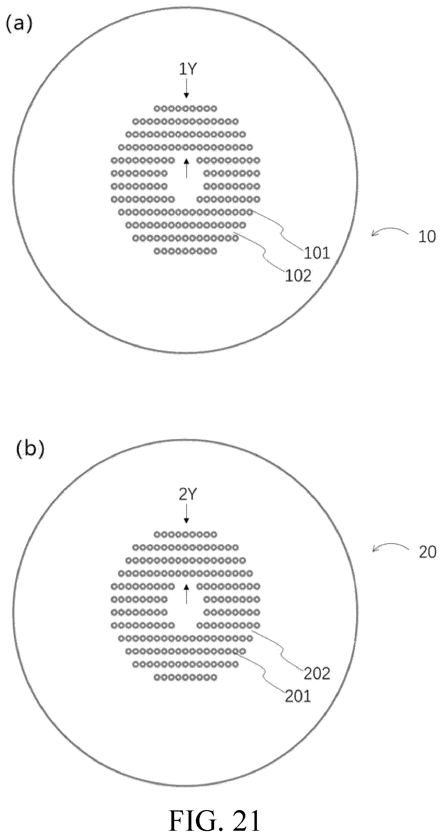

(a) of FIG. 21 is a schematic diagram of a first lens element according to some embodiments of this application. (b) of FIG. 21 is a schematic diagram of a second lens element according to some embodiments of this application.

Referring to (a) of FIG. 21, in some implementations, a plurality of first regions A 101 spaced apart from each other and a plurality of first regions B 102 spaced apart from each other in a 1Y^{th} optical region are alternately arranged in a straight-line direction. Referring to (b) of FIG. 21, in some implementations, a plurality of second regions A 201 spaced apart from each other and a plurality of second regions B 202 spaced apart from each other in a 2Y^{th} optical region are alternately arranged in a straight-line direction. Based on this, the wearer can be provided with improved clarity and/or comfort experience and/or a correction effect.

Referring to (a) of FIG. 21, a plurality of first regions A 101 spaced apart from each other and a plurality of first regions B 102 spaced apart from each other in a 1Y^{th} optical region are parallel to each other. Referring to (b) of FIG. 21, a plurality of second regions A 201 spaced apart from each other and a plurality of second regions B 202 spaced apart from each other in a 2Y^{th} optical region are parallel to each other. Based on this, the wearer can be provided with improved clarity and/or comfort experience and/or a correction effect.

Referring to FIG. 18 to FIG. 21, in some implementations, projections of M first regions A 101 of the first lens element 10 on the second lens element 20 partially overlap or completely overlap with M second regions B 202 of the second lens element 20 in one-to-one correspondence; and projections of N second regions A 201 of the second lens element 20 on the first lens element 10 partially overlap or completely overlap with N first regions B 102 of the first lens element 10 in one-to-one correspondence, where M and N are natural numbers self-contained from each other. Based on this, the wearer can be provided with improved clarity and/or comfort experience and/or a correction effect.

Referring to FIG. 18 to FIG. 21, in some implementations, M and N are each independently 1, 2, 3, 4, 5, 6, 7, 8, 9, or 10. Referring to FIG. 18 to FIG. 21, in some implementations, M = N. Based on this, the wearer can be provided with improved clarity and/or comfort experience and/or a correction effect.

Referring to FIG. 18 to FIG. 21, in some implementations, an overlapping part of the projection of the first region A 101 on the second lens element 20 and the second region B 202 accounts for 50% or more of each of an area of the first region A 101 and an area of the first region B 102. Referring to FIG. 18 to FIG. 21, in some implementations, an overlapping part of the projection of the second region A 201 on the first lens element 10 and the first region B 102 accounts for 50% or more of each of an area of the first region B 102 and an area of the second region A 201. Based on this, the wearer can be provided with improved clarity and/or comfort experience and/or a correction effect.

Referring to FIG. 18 to FIG. 21, in some implementations, an overlapping part of the projection of the first region A 101 on the second lens element 20 and the second region B 202 accounts for 70% or more of each of an area of the first region A 101 and an area of the first region B 102. Referring to FIG. 18 to FIG. 21, in some implementations, an overlapping part of the projection of the second region A 201 on the first lens element 10 and the first region B 102 accounts for 70% or more of each of an area of the first region B 102 and an area of the second region A 201. Based on this, the wearer can be provided with improved clarity and/or comfort experience and/or a correction effect.

Referring to FIG. 18 to FIG. 21, in some implementations, an overlapping part of the projection of the first region A 101 on the second lens element 20 and the second region B 202 accounts for 90% or more of each of an area of the first region A 101 and an area of the first region B 102. Referring to FIG. 18 to FIG. 21, in some implementations, an overlapping part of the projection of the second region A 201 on the first lens element 10 and the first region B 102 accounts for 90% or more of each of an area of the first region B 102 and an area of the second region A 201. Based on this, the wearer can be provided with improved clarity and/or comfort experience and/or a correction effect.

Referring to FIG. 18 to FIG. 21, in some implementations, all first regions A 101 on the first lens element 10 form a rotationally symmetric pattern, and a rotational symmetry center of the rotationally symmetric pattern is the optical center of the first lens element 10. Referring to FIG. 18 to FIG. 21, in some implementations, all first regions B 102 on the first lens element 10 form a rotationally symmetric pattern, and a rotational symmetry center of the rotationally symmetric pattern is the optical center of the first lens element 10. Referring to FIG. 18 to FIG. 21, in some implementations, all second regions A 201 on the second lens element 20 form a rotationally symmetric pattern, and a rotational symmetry center of the rotationally symmetric pattern is the optical center of the second lens element 20. Referring to FIG. 18 to FIG. 21, in some implementations, all second regions B 202 on the second lens element 20 form a rotationally symmetric pattern, and a rotational symmetry center of the rotationally symmetric pattern is the optical center of the second lens element 20. Based on this, the wearer can be provided with improved clarity and/or comfort experience and/or a correction effect.

In some implementation solutions, a rotation angle of the rotationally symmetric pattern is 180 °, 120 °, 90 °, 72 °, 60 °, or 45 °. Optionally, a rotation angle of the rotationally symmetrical pattern is 120 ° or less. Optionally, the rotationally symmetrical pattern is a circle or a circular ring. In this case, a rotation angle of the rotationally symmetrical pattern is infinitesimal. Based on this, the wearer can be provided with improved clarity and/or comfort experience and/or a correction effect.

Referring to FIG. 18 and FIG. 20, in some implementations, one or each first region A 101 of the first lens element 10 is in an annular shape, and a symmetry center of the annular shape is the optical center of the first lens element 10. Referring to FIG. 18 and FIG. 20, in some implementations, one or each first region B 102 of the first lens element 10 is in an annular shape, and a symmetry center of the annular shape is the optical center of the first lens element 10. Referring to FIG. 18 and FIG. 20, in some implementations, one or each second region A 201 of the second lens element 20 is in an annular shape, and a symmetry center of the annular shape is the optical center of the second lens element 20. Referring to FIG. 18 and FIG. 20, in some implementations, one or each second region B 202 of the second lens element 20 is in an annular shape, and a symmetry center of the annular shape is the optical center of the second lens element 20. Based on this, the wearer can be provided with improved clarity and/or comfort experience and/or a correction effect.

In this application, the term "annular" is understood not only as a circular ring design solution, but also as a polygonal design solution having a plurality of straight line segments.

Referring to FIG. 18 to FIG. 21, in some implementations, the 1Y^{th} optical region is formed by one or more first regions A 101 and one or more first regions B 102. Referring to FIG. 18 to FIG. 21, in some implementations, the 2Y^{th} optical region is formed by one or more second regions A 201 and one or more second regions B 202.

Referring to FIG. 18 to FIG. 21, in some implementations, in the 1Y^{th} optical region, a total area of the insular regions 50 ranges from 10% to 60% relative to a total area of the 1Y^{th} optical region. Referring to FIG. 18 to FIG. 21, in some implementations, in the 2Y^{th} optical region, a total area of the insular regions 50 ranges from 10% to 60% relative to a total area of the 2Y^{th} optical region. Based on this, the wearer can be provided with improved clarity and/or comfort experience and/or a correction effect.

Referring to FIG. 18 to FIG. 21, in some implementations, a projection of the 1Y^{th} optical region on the second lens element 20 partially or completely overlaps with the 2Y^{th} optical region. Referring to FIG. 18 to FIG. 21, in some implementations, a projection of the 2Y^{th} optical region on the first lens element 10 partially or completely overlaps with the 1Y^{th} optical region. Based on this, the wearer can be provided with improved clarity and/or comfort experience and/or a correction effect.

Referring to FIG. 18 to FIG. 21, in some implementations, a shape of the 1Y^{th} optical region of the first lens element 10 is a rotationally symmetrical pattern, and a symmetry center of the rotationally symmetric pattern is the optical center of the first lens element 10. Referring to FIG. 18 to FIG. 21, in some implementations, a shape of the 2Y^{th} optical region of the second lens element 20 is a rotationally symmetrical pattern, and a symmetry center of the rotationally symmetric pattern is the optical center of the second lens element 20. Based on this, the wearer can be provided with improved clarity and/or comfort experience and/or a correction effect.

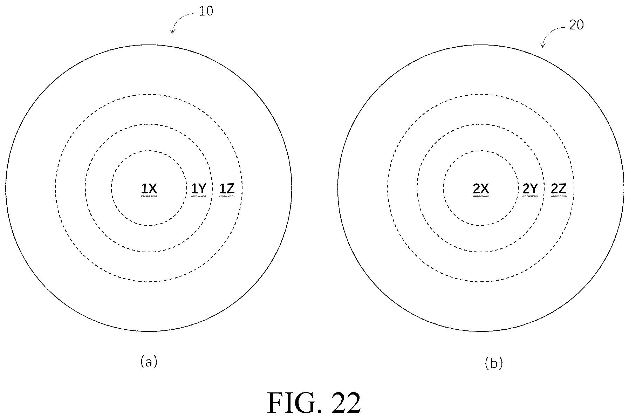

(a) of FIG. 22 is a schematic diagram of a first lens element according to some embodiments of this application. (b) of FIG. 22 is a schematic diagram of a second lens element according to some embodiments of this application.

Referring to FIG. 22, in some implementations, a 1X^{th} optical region is further arranged near the optical center of the first lens element 10, the 1X^{th} optical region is closer to the optical center of the first lens element 10 than the 1Y^{th} optical region, and the 1X^{th} optical region is substantially formed by the base region 55. Referring to FIG. 22, in some implementations, a 2X^{th} optical region is further arranged near the optical center of the second lens element 20, the 2X^{th} optical region is closer to the optical center of the second lens element 20 than the 2Y^{th} optical region, and the 2X^{th} optical region is substantially formed by the base region 55. Based on this, the wearer can be provided with improved clarity and/or comfort experience and/or a correction effect.

Referring to FIG. 22, in some implementations, a projection of the 1X^{th} optical region on the second lens element 20 partially or completely overlaps with the 2X^{th} optical region. Referring to FIG. 22, in some implementations, a projection of the 2X^{th} optical region on the first lens element 10 partially or completely overlaps with the 1X^{th} optical region. Based on this, the wearer can be provided with improved clarity and/or comfort experience and/or a correction effect.

Referring to FIG. 22, in some implementations, a shape of the 1X^{th} optical region of the first lens element 10 is a rotationally symmetrical pattern, and a symmetry center of the rotationally symmetric pattern is the optical center of the first lens element 10. Referring to FIG. 22, in some implementations, a shape of the 2X^{th} optical region of the second lens element 20 is a rotationally symmetrical pattern, and a symmetry center of the rotationally symmetric pattern is the optical center of the second lens element 20. Based on this, the wearer can be provided with improved clarity and/or comfort experience and/or a correction effect.

Referring to FIG. 22, in some implementations, a 1Z^{th} optical region is further arranged near the optical center of the first lens element 10, the 1Z^{th} optical region is farther away from the optical center than the 1Y^{th} optical region, and a plurality of self-contained insular regions 50 are arranged in the 1Z^{th} optical region. Referring to FIG. 22, in some implementations, a 2Z^{th} optical region is further arranged near the optical center of the second lens element 20, the 2Z^{th} optical region is farther away from the optical center than the 2Y^{th} optical region, and a plurality of self-contained insular regions 50 are arranged in the 2Z^{th} optical region. Based on this, the wearer can be provided with improved clarity and/or comfort experience and/or a correction effect.

Referring to FIG. 22, in some implementations, a projection of the 1Z^{th} optical region on the second lens element 20 partially or completely overlaps with the 2Z^{th} optical region. Referring to FIG. 22, in some implementations, a projection of the 2Z^{th} optical region on the first lens element 10 partially or completely overlaps with the 1Z^{th} optical region. Based on this, the wearer can be provided with improved clarity and/or comfort experience and/or a correction effect.

Referring to FIG. 22, in some implementations, the 1Z^{th} optical region and the 2Z^{th} optical region have substantially the same distribution density of insular regions 50. Based on this, the wearer can be provided with improved clarity and/or comfort experience and/or a correction effect.

Referring to FIG. 22, in some implementations, a shape of the 1Z^{th} optical region of the first lens element 10 is a rotationally symmetrical pattern, and a symmetry center of the rotationally symmetric pattern is the optical center of the first lens element 10. Referring to FIG. 22, in some implementations, a shape of the 2Z^{th} optical region of the second lens element 20 is a rotationally symmetrical pattern, and a symmetry center of the rotationally symmetric pattern is the optical center of the second lens element 20. Based on this, the wearer can be provided with improved clarity and/or comfort experience and/or a correction effect.

Referring to FIG. 22, in some implementations, the 1X^{th} optical region is located within a circular region with a radius of R₁ mm and with the optical center of the first lens element 10 as the center, and R₁ is any value between 2.5 and 10. Referring to FIG. 22, in some implementations, the 2X^{th} optical region is located within a circular region with a radius of R₁ mm and with the optical center of the second lens element 20 as the center, and R₁ is any value between 2.5 and 10. Based on this, the wearer can be provided with improved clarity and/or comfort experience and/or a correction effect.

Referring to FIG. 22, in some implementations, the 1X^{th} optical region does not overlap with the 1Y^{th} optical region. Referring to FIG. 22, in some implementations, the 2X^{th} optical region does not overlap with the 2Y^{th} optical region. Based on this, the wearer can be provided with improved clarity and/or comfort experience and/or a correction effect.

Referring to FIG. 22, in some implementations, the 1Y^{th} optical region is located within a circular region with a radius of R₂ mm and with the optical center of the first lens element 10 as the center, and R₂ is any value between 5 and 35. Referring to FIG. 22, in some implementations, the 2Y^{th} optical region is located within a circular region with a radius of R₂ mm and with the optical center of the second lens element 20 as the center, and R₂ is any value between 5 and 35. Based on this, the wearer can be provided with improved clarity and/or comfort experience and/or a correction effect.

Referring to FIG. 22, in some implementations, the 1Z^{th} optical region is located within a circular region with a radius of R₃ mm and with the optical center of the first lens element 10 as the center, and R₃ is any value between 5 and 35. Referring to FIG. 22, in some implementations, the 2Z^{th} optical region is located within a circular region with a radius of R₃ mm and with the optical center of the second lens element 20 as the center, and R₃ is any value between 5 and 35. Based on this, the wearer can be provided with improved clarity and/or comfort experience and/or a correction effect.

Referring to FIG. 22, in some implementations, the 1Z^{th} optical region does not overlap with the 1Y^{th} optical region. Referring to FIG. 22, in some implementations, the 2Z^{th} optical region does not overlap with the 2Y^{th} optical region.

Referring to FIG. 18 to FIG. 22, in some implementations, in the first lens element 10, a region other than insular regions 50 is a base region 55. Referring to FIG. 18 to FIG. 22, in some implementations, in the second lens element 20, a region other than insular regions 50 is a base region 55. Based on this, the wearer can be provided with improved clarity and/or comfort experience and/or a correction effect.

Referring to FIG. 18 to FIG. 22, in some implementations, a shape of a section (the section is parallel to a surface of the lens element) of one or each insular region 50 is a circle or a similar shape. Based on this, the wearer can be provided with improved clarity and/or comfort experience and/or a correction effect.

Referring to FIG. 18 to FIG. 22, in some implementations, an outer diameter of one or each insular region 50 ranges from 0.8 mm to 2.0 mm.

Referring to FIG. 18 to FIG. 22, in some implementations, an area of one or each insular region 50 ranges from 0.50 mm² to 3.14 mm².

Referring to FIG. 18 to FIG. 22, in some implementations, one or each insular region 50 conforms to a ratio of L² to S ranging from 4π to 20, where L is a perimeter of the insular region 50, and S is an area of the insular region 50.

Referring to FIG. 18 to FIG. 22, in some implementations, a surface shape of the insular region 50 of the first lens element 10 is different from a surface shape of the base region 55, so that a refractive power of the insular region 50 is different from a refractive power of the base region 55.

Referring to FIG. 18 to FIG. 22, in some implementations, a surface shape of the insular region 50 of the second lens element 20 is different from a surface shape of the base region 55, so that a refractive power of the insular region 50 is different from a refractive power of the base region 55.

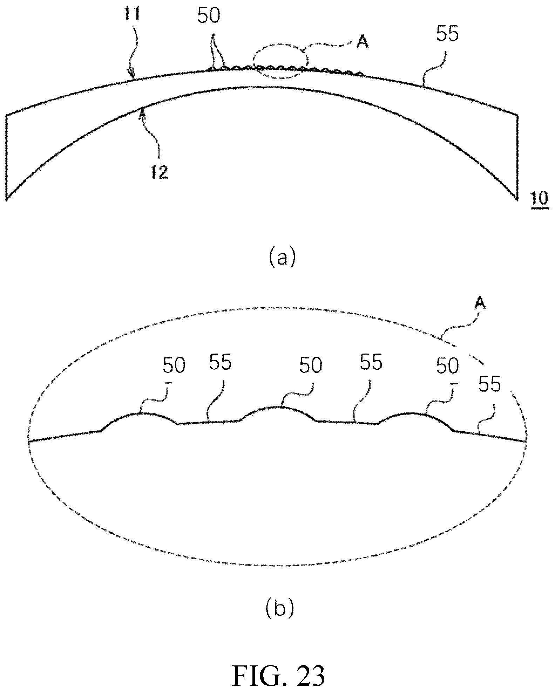

As shown in sectional views of (a) and (b) of FIG. 23, a first lens element 10 has a first side 11 and a second side 12. A base region 55 and insular regions 50 are arranged on the first side 11. A surface of each insular region 50 is formed into a convex spherical shape, and the surface of the insular region 50 has a curvature greater than a curvature of a surface of the base region 55. Therefore, a refractive power of the insular region 50 is greater than a refractive power of the base region by 2.00 D to 5.00 D.

Referring to FIG. 23, in some implementations, a surface shape of the insular region 50 of the first lens element 10 is formed into a convex shape or a concave shape relative to a surface shape of the base region 55.

Referring to FIG. 23, in some implementations, a surface shape of the insular region 50 of the second lens element 20 is formed into a convex shape or a concave shape relative to a surface shape of the base region 55.

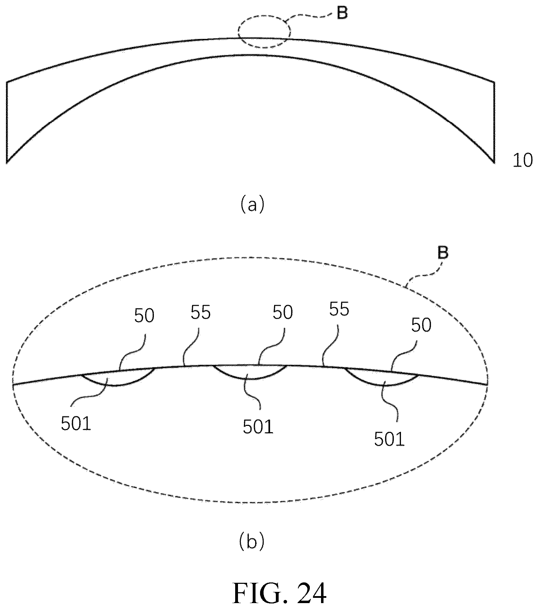

(a) of FIG. 24 is a sectional view of a lens element according to another implementation of the present invention. (b) of FIG. 24 is an enlarged view of a part B in (a) of FIG. 24. Among the lens elements shown in the figures, a part of the insular region 50 is made of a material different from a material forming the base region 55. That is to say, a high-refractive-index material portion 551 with a large refractive index is arranged in the insular region 50 in a substantially plano-convex shape inward from a surface of the insular region 50 in a thickness direction. Similarly, with this structure, a function the same as the function of the insular region 50 in the foregoing implementation can be obtained. In this case, for example, a plastic material such as a CR₃9 material may be used as the material for forming the base region 55. The CR₃9 material is made of a thermally curable allyl resin (allyl resin) with a refractive index of 1.5. For example, a plastic material made of a thermally curable polythiourethane resin (polythiourethane resin) with a refractive index of 1.67 may be used as a high-refraction material to prepare the insular region 50.

Referring to FIG. 24, in some implementations, the insular region 50 of the first lens element 10 is made of a material different from a material of the base region 55 of the first lens element 10, so that the insular region 50 of the first lens element 10 has a refractive power different from a refractive power of the base region 55 of the first lens element 10.

Referring to FIG. 24, in some implementations, the insular region 50 of the second lens element 20 is made of a material different from a material of the base region 55 of the second lens element 20, so that the insular region 50 of the second lens element 20 has a refractive power different from a refractive power of the base region 55 of the second lens element 20.

Referring to FIG. 18 to FIG. 23, in some implementations, an equivalent diameter of the first lens element 10 is 40 mm or more. Referring to FIG. 18 to FIG. 23, in some implementations, an equivalent diameter of the second lens element 20 is 40 mm or more.

Referring to FIG. 18 to FIG. 23, in some implementations, a thickness of the first lens element 10 at a thinnest position is 0.5 mm or more. Referring to FIG. 18 to FIG. 23, in some implementations, a thickness of the first lens element 20 at a thinnest position is 0.5 mm or more.

Referring to FIG. 18 to FIG. 23, in some implementations, the first lens element 10 and the second lens element 20 have substantially the same shape and size.

Referring to FIG. 18 to FIG. 23, in some implementations, the first lens element 10 is an optical lens having a function of inhibiting the development of myopia, and the insular region 50 of the first lens element 10 has a refractive power obtained by adding a positive refractive power to the base refractive power.

Referring to FIG. 18 to FIG. 23, in some implementations, the first lens element 10 is an optical lens having a function of inhibiting the development of hypermetropia, and the insular region 50 of the first lens element 10 has a refractive power obtained by adding a negative refractive power to the base refractive power.

Referring to FIG. 18 to FIG. 23, in some implementations, the second lens element 20 is an optical lens having a function of inhibiting the development of myopia, and the insular region 50 of the second lens element 20 has a refractive power obtained by adding a positive refractive power to the base refractive power.

Referring to FIG. 18 to FIG. 23, in some implementations, the second lens element 20 is an optical lens having a function of inhibiting the development of hypermetropia, and the insular region 50 of the second lens element 20 has a refractive power obtained by adding a negative refractive power to the base refractive power.

Referring to FIG. 27, in some implementations, a pair of spectacles of this application include a spectacle frame 30 and an optical lens group 1 mounted on the spectacle frame 30, where the optical lens group 1 is any optical lens group described above. The optical lens group 1 includes a first lens element 10 and a second lens element 20.

In some implementation solutions, this application provides a method for assembling a pair of spectacles, including:
providing a spectacle frame and an optical lens group mounted on the spectacle frame, where the optical lens group is any optical lens group described above; and
respectively mounting the first lens element and the second lens element on the spectacles frame at positions corresponding to a first eye and a second eye of a wearer, where
relative positions of the first lens element and the second lens element are configured to satisfy the following specific relationship, where the specific relationship includes:
   (1) the first region A of the first lens element forms a 1A^{th} projection on the first eye, the second region B of the second lens element forms a 2B^{th} projection on the second eye, and the 1A^{th} projection after being translated by an interpupillary distance toward the second eye can at least partially overlap or completely overlap with the 2B^{th} projection; and
   (2) the second region A of the second lens element forms a 2A^{th} projection on the second eye, the first region B of the first lens element forms a 1B^{th} projection on the first eye, and the 2A^{th} projection after being translated by the interpupillary distance toward the first eye can at least partially overlap or completely overlap with the 1B^{th} projection.

In some implementation solutions, in the method for assembling spectacles, the first lens element and/or the second lens element are caused to rotate around the central axis at positions corresponding to the first eye and the second eye of the wearer, so that relative positions of the first lens element and the second lens element are configured to satisfy the specific relationship.

In some implementations, the lens element is a layered body.

In some implementations, the lens element is a multi-layer body.

In some implementations, the lens element is transparent.

In some implementations, a material of the lens element is plastic or glass.

In some implementations, the lens element contains a dye.

In some implementations, the lens element is a multi-layer body, and at least one layer of the multi-layer body contains a dye.

In some implementations, an outer diameter of an insular region refers to a radius of a circle with an equal area of the insular region.

In some implementations, on one lens element, the insular region is adjacent to the base region.

In some implementations, on one lens element, the insular region and the base region do not overlap with each other.

In some implementations, on one lens element, the 1X^{th} optical region is adjacent to the 1Y^{th} optical region.

In some implementations, on one lens element, the 1Y^{th} optical region is adjacent to the 1Z^{th} optical region.

In some implementations, on one lens element, the 1Y^{th} optical region is located between the 1X^{th} optical region and the 1Z^{th} optical region.

In some implementations, on one lens element, the 1X^{th} optical region, the 1Y^{th} optical region, and the 1Z^{th} optical region do not overlap with each other.

In some implementations, near the optical center of the lens element, a plurality of self-contained insular regions are formed in the 1Y^{th} optical region and the 2Y^{th} optical region. The base region is formed into a region other than a region formed into an insular region.

In some implementations, the lens element is a non-contact spectacle lens, that is, a spectacle lens that is not in contact with a cornea of a wearer when worn.

In some implementation solutions, the lens element is a contact spectacle lens, that is, a spectacle lens that is in contact with a cornea of a wearer when worn.

### Experimental data

The following further describes advantages of the technical solutions of this application through specific experimental data.

### Embodiment 1

A pair of spectacles is provided. The spectacles are equipped with an optical lens group shown in FIG. 25, including a first lens element and a second lens element.

The first lens element includes a base region 55 and insular regions 50. The base region 55 has a refractive power of 0.00 D (a base refractive power), and the insular region 50 has a refractive power of 3.50 D (a refractive power different from the base refractive power). A hexagonal 1X^{th} optical region, an annular 1Y^{th} optical region, and an annular 1Z^{th} optical region are sequentially arranged near an optical center of the first lens element. The 1X^{th} optical region is formed by the base region 55. The 1Y optical region includes a plurality of annular first regions A 101 and a plurality of annular first regions B. A plurality of self-contained insular regions 50 are arranged in each of the first regions A, and a proportion of the area of the insular regions 50 in the first regions A is 75%. The first regions B are formed by the base region 55. A ratio of the area of the first region A to that of the first region B in the annular 1Y^{th} optical region is 1: 1. A plurality of self-contained insular regions 50 are distributed in the 1Z^{th} optical region, and a proportion of the area of the insular regions 50 is 37.5%. The area of the 1X^{th} optical region, the area of the 1Y^{th} optical region, and the area of the 1Z^{th} optical region are 78 mm², 373 mm², and 804 mm² respectively.

The second lens element includes a base region 55 and insular regions 50. The base region 55 has a refractive power of 0.00 D, and the insular region 50 has a refractive power of 3.50 D. A circular 2X^{th} optical region, an annular 2Y^{th} optical region, and an annular 2Z^{th} optical region are sequentially arranged near an optical center of the second lens element. The 2X^{th} optical region is formed by the base region 55. The 2Y optical region includes three annular second regions A and two annular second regions B. A plurality of self-contained insular regions 50 are distributed in the second region A, a proportion of the area of the insular regions 50 is 75%, and the second regions B are formed by the base region 55. A ratio of the area of the second region A to that of the second region B is 1: 1. A plurality of self-contained insular regions 50 are distributed in the 2Z^{th} optical region, and a proportion of the area of the insular regions 50 is 37.5%. The area of the 2X^{th} optical region, the area of the 2Y^{th} optical region, and the area of the 2Z^{th} optical region are 78 mm², 373 mm², and 804 mm² respectively.

The first lens element and the second lens element are assembled onto the spectacles, relative positions of the first lens element and the second lens element are configured to satisfy the following specific relationship, where the specific relationship includes:
(1) the first region A of the first lens element forms a 1A^{th} projection on the first eye, the second region B of the second lens element forms a 2B^{th} projection on the second eye, and the 1A^{th} projection after being translated by an interpupillary distance toward the second eye can completely overlap with the 2B^{th} projection; and
(2) the second region A of the second lens element forms a 2A^{th} projection on the second eye, the first region B of the first lens element forms a 1B^{th} projection on the first eye, and the 2A^{th} projection after being translated by the interpupillary distance toward the first eye can completely overlap with the 1B^{th} projection.

### Comparative Example 1

A pair of spectacles is provided. The spectacles are equipped with an optical lens group shown in FIG. 26, including a first lens element and a second lens element.

The first lens element includes a base region 55 and insular regions 50. The base region 55 has a refractive power of 0.00 D, and the insular region 50 has a refractive power of 3.50 D. A hexagonal 7X^{th} optical region and an annular 7Z^{th} optical region are sequentially arranged near an optical center of the first lens element. The 7X^{th} optical region is formed by the base region 55. A plurality of self-contained insular regions 50 are distributed in the 7Z^{th} optical region, and a proportion of the area of the insular regions 50 in the 7Z^{th} optical region is 37.5%. The area of the 7X^{th} optical region and the area of the 7Z^{th} optical region are 78 mm² and 1177 mm² respectively.

The second lens element includes a base region 55 and insular regions 50. The base region 55 has a refractive power of 0.00 D, and the insular region 50 has a refractive power of 3.50 D. A hexagonal 9X^{th} optical region and an annular 9Z^{th} optical region are sequentially arranged near an optical center of the second lens element. The 9X^{th} optical region is formed by the base region 55. A plurality of self-contained insular regions 50 are distributed in the 9Z^{th} optical region, and a proportion of the area of the insular regions 50 in the 9Z^{th} optical region is 37.5%. The area of the 9X^{th} optical region and the area of the 9Z^{th} optical region are 78 mm² and 1177 mm² respectively.

### Blank example

A pair of spectacles is provided. The spectacles are equipped with an optical lens group, including a first lens element and a second lens element. The first lens element has only a base region 55, and the base region 55 has a refractive power of 0. The second lens element has only a base region 55, and the base region 55 has a refractive power of 0.

### Visual clarity test:

The wearer wears the spectacles in Embodiment 1, Comparative Example 1, and the blank example respectively, and is subject to a sight test according to the GB/T 11533-2011 standard at a distance of 5 meters from an eye chart, and the wearer is instructed to observe the eye chart through a specified region of a lens element.

For the lens element of Embodiment 1, the wearer is instructed to observe the eye chart through the 1X, 1Y, and 1Z regions of the lens element separately.

For the lens element of Comparative Example 1, the wearer is instructed to observe the eye chart through the 7X and 7Z regions of the lens element separately.

For the lens element of the blank example, because the lens element as a whole is the base region, the wearer is instructed to directly observe the eye chart through the base region.

The results are as follows:

**Table 1 Recorded sight values**

| | | | | |
|---|---|---|---|---|
| Embodiment 1 | Region | 1X/2X | 1Y/2Y | 1Z/2Z |
| | Sight value | 5.3 | 5.2 | 5.0 |
| Comparative Example 1 | Region | 7X/9X | 7Z/9Z | |
| | Sight value | 5.3 | 5.0 | |
| Blank example | Region | All regions | | |
| | Sight value | 5.3 | | |

It can be learned from the foregoing table that:
(1) The spectacles in the blank example do not have any insular region for focusing an image at a position other than the retina of the eye to inhibit the development of the refractive error of the eye, and the sight of the wearer is not affected by any insular region. Therefore, the wearer wearing the spectacles in the blank example exhibits a sight value of 5.3.
(2) The spectacles of Comparative Example 1 have a (7X/9X)^{th} optical region and a (7Z/9Z)^{th} optical region. The (7X/9X)^{th} optical region does not have any insular region for focusing an image at a position other than the retina of the eye to inhibit the development of the refractive error of the eye. Therefore, the wearer observes through this region and exhibits a sight value of 5.3. The (7Z/9Z)^{th} optical region has an insular region for focusing an image at a position other than the retina of the eye to inhibit the development of the refractive error of the eye. The sight of the wearer through this region is only 5.0, and the sight value is not high.
(3) The spectacles in Embodiment 1 have a (1X/2X)^{th} optical region, a (1Y/2Y)^{th} optical region, and a (1Z/2Z)^{th} optical region. The (1X/2X)^{th} optical region does not have any insular region for focusing an image at a position other than the retina of the eye to inhibit the development of the refractive error of the eye. Therefore, the wearer observes through this region and exhibits a sight value of 5.3. The (1Z/2Z)^{th} optical region has an insular region for focusing an image at a position other than the retina of the eye to inhibit the development of the refractive error of the eye. The sight of the wearer through this region is only 5.0. A first region A and a first region B corresponding to the first eye and a second region A and a second region B corresponding to the second eye in the (1Y/2Y)^{th} optical area have a two-eye-complementary structure unique to this application. Specifically, a region of the first eye weakened by the first region A is offset in the second region B of the second eye, and a region of the second eye weakened by the first region B is offset in the first region A of the first eye, so that the sight of the wearer when observing the sight chart through the (1Y/2Y)^{th} optical region is as high as 5.2. It can be seen that the region not only can inhibit the development of the refractive error of the eye, but also can substantially lose no sight value.

In addition, the inventor further finds that the optical lens group of Embodiment 1 of this application shows results very close to those of the blank example in a plurality of visual function tests (especially binocular visual function tests, such as a sensory fusion test and a motor fusion test), indicating that the optical lens group of this application not only can inhibit the development of refractive errors of the eyes, but also can substantially not weaken the visual function of the wearer.

The foregoing results indicate that the optical lens group, the lens element, and the spectacles of this application can provide the wearer with a good sight value and a good visual function while inhibiting the development of the refractive error of the eye.

Finally, it should be noted that the foregoing embodiments are merely used for describing the technical solutions of the present invention, but are not intended to limit the present invention. Although the present invention is described in detail with reference to the preferable embodiments, it should be appreciated by a person skilled in the art that, modifications may still be made to the specific embodiments of the present invention, or equivalent replacements may be made to the part of the technical features; and without departing from the spirit the technical solutions of the present invention, the modifications or equivalent replacements should all be covered in the scope of the technical solutions that the present invention claims to protect.

## Claims

1. A lens element, comprising:
a base region, wherein the base region comprises a prescription region for correcting a refractive error of an eye; and
a plurality of insular regions, wherein the insular regions comprise regions for inhibiting development of the refractive error of the eye,
wherein at least some of the insular regions are adjacent to each other and have a shared edge; and
for edges of all the insular regions on the lens element, a length of a shared edge portion is L₁, a length of a non-shared edge portion is L₂, and a ratio of L₁ to L₂ is 0.3 or more.

2. The lens element according to claim 1, wherein the insular region comprises one or more of the following:
the first insular region, wherein the first insular region is configured to scatter incident light to inhibit development of a refractive error of an eye; and
the second insular region, wherein the second insular region is configured to focus an image at a position other than a retina of the eye to inhibit the development of the refractive error of the eye.

3. The lens element according to claim 1, wherein the prescription region for correcting a refractive error of an eye has a first refractive power, and the first refractive power is a prescription refractive power for correcting the refractive error of the eye;
the region for inhibiting the development of the refractive error of the eye has a second refractive power, and the second refractive power focus an image at a position other than the retina of the eye; and
the second refractive power is different from the first refractive power.

4. The lens element according to claim 1, wherein insular regions having a shared edge are fused with each other at the shared edge.

5. The lens element according to claim 1, wherein no base region exists between adjacent insular regions having a shared edge.

6. The lens element according to claim 1, wherein one or more insular regions are partially or completely surrounded by one or more other insular regions.

7. The lens element according to claim 1, wherein the insular regions have optical centers self-contained from each other respectively.

8. The lens element according to claim 1, wherein one or more insular regions are microlenses.

9. The lens element according to claim 1, wherein the lens element comprises an insular region array, the insular region array comprises a plurality of insular regions arranged successively, and adjacent insular regions have a shared edge.

10. The lens element according to claim 9, wherein
in a first direction, the insular region array comprises a plurality of insular regions arranged successively, and adjacent insular regions have a shared edge;
in a second direction, the insular region array comprises a plurality of insular regions arranged successively, and adjacent insular regions have a shared edge; and
an angle exists between the first direction and the second direction.

11. The lens element according to claim 9, wherein the insular region array is completely overlaid by a plurality of insular regions.

12. The lens element according to claim 9, wherein the lens element comprises a plurality of insular region arrays, and the plurality of insular region arrays are spaced apart from each other.

13. The lens element according to claim 9, wherein the lens element comprises a plurality of strip-shaped insular region arrays, and the plurality of strip-shaped insular region arrays are spaced parallel to each other.

14. The lens element according to claim 9, wherein the lens element comprises a plurality of straight-strip-shaped insular region arrays, and the plurality of straight-strip-shaped insular region arrays are spaced parallel to each other.

15. The lens element according to claim 1, wherein the lens element has a first side surface and a second side surface opposite to the first side surface, and the lens element has one or more of the following features:
(1) one or more insular regions are located on the first side surface of the lens element;
(2) one or more insular regions are located on the second side surface of the lens element; and
(3) one or more insular regions are located between the first side surface and the second side surface of the lens element.

16. The lens element according to claim 1, wherein the lens element is a lens element having a function of inhibiting the development of myopia, and the insular region has a refractive power obtained by adding a positive refractive power to the base refractive power.

17. The lens element according to claim 1, wherein the lens element is a lens element having a function of inhibiting the development of hypermetropia, and the insular region has a refractive power obtained by adding a negative refractive power to the base refractive power.

18. The lens element according to claim 1, having one or more of the following features:
(1) each of the plurality of insular regions independently has any one of the following refractive surfaces: a spherical refractive surface, an aspherical refractive surface, a normally curved refractive surface, a toric refractive surface, a concave refractive surface, or a convex refractive surface.
(2) the base region has one or more of the following refractive surfaces: a spherical refractive surface, an aspherical refractive surface, a normally curved refractive surface, a toric refractive surface, a concave refractive surface, or a convex refractive surface.

19. The lens element according to claim 1, wherein a shape of a projection of one or more insular regions on a side surface of the lens element comprises one or more of the following: a circle, a circle-like shape, a polygon, a polygon-like shape, and a strip shape.

20. The lens element according to claim 1, wherein the insular region is defined as a region further having the following feature: a region with a size of 3 mm or less in at least one direction.

21. The lens element according to claim 1, wherein a shape of a projection of one or more insular regions on a side surface of the lens element has one or more of the following features:
(1) the shape of the projection is a circle, a circle-like shape, a polygon, or a polygon-like shape;
(2) an outer diameter of the shape of the projection ranges from 0.001 mm to 2.0 mm;
(3) an area of the shape of the projection ranges from 0.001 mm² to 3.14 mm²; and
(4) the shape of the projection conforms to a ratio of L² to S ranging from 4π to 20, wherein L is a perimeter of a cross section, and S is an area of the cross section.

22. The lens element according to claim 1, having one or more of the following features:
(1) an equivalent diameter of the lens element is 40 mm or more;
(2) a thickness of the lens element at a thinnest position is 0.5 mm or more; and
(3) at least some insular regions are distributed near an optical center of the lens element.

23. The lens element according to claim 1, wherein the ratio of L₁ to L₂ is 0.5 or more.

24. The lens element according to claim 1, wherein the ratio of L₁ to L₂ is 1 or more.

25. The lens element according to claim 1, wherein the lens element is a spectacle lens; optionally, the lens element is a non-contact spectacle lens; and optionally, the lens element is a contact spectacle lens.

26. A pair of spectacles, comprising a spectacle frame and a lens element mounted on the spectacle frame, wherein the lens element is the lens element according to any one of claims 1 to 25.

27. The spectacles according to claim 26, comprising: a first lens element and a second lens element mounted on the spectacles frame, wherein the spectacles have one or more of the following features (1) to (2):
(1) a plurality of straight-strip-shaped insular region arrays spaced apart from each other are arranged on the first lens element, the plurality of straight-strip-shaped insular region arrays are arranged parallel to each other, and the plurality of straight-strip-shaped insular region arrays are parallel to a connection line between a center of the first lens element and a center of the second lens element; and
(2) a plurality of straight-strip-shaped insular region arrays spaced apart from each other are arranged on the second lens element, the plurality of straight-strip-shaped insular region arrays are arranged parallel to each other, and the plurality of straight-strip-shaped insular region arrays are parallel to the connection line between the center of the first lens element and the center of the second lens element.

28. A mold, wherein the mold has a mold cavity, and a shape of the mold cavity is configured to correspond to a shape of the lens element according to any one of claims 1 to 25.

29. An optical lens group, comprising a first lens element and a second lens element, wherein
the first lens element comprises:
a base region, wherein the base region has a base refractive power; and
insular regions, wherein the insular region has a refractive power different from the base refractive power and has a function of focusing an image at a position other than a retina of the eye to inhibit development of the refractive error of the eye;
a 1Y^{th} optical region is arranged near an optical center of the first lens element, the 1Y^{th} optical region comprises a first region A and a first region B, a plurality of self-contained insular regions are arranged in the first region A, the first region B is substantially formed by the base region or a plurality of self-contained insular regions are distributed in the first region B, and the first region B has a lower distribution density of insular regions than the first region A; and
the second lens element comprises:
a base region, wherein the base region has a base refractive power; and
an insular region, wherein the insular region has a refractive power different from the base refractive power and has a function of focusing an image at a position other than a retina of the eye to inhibit development of the refractive error of the eye;
a 2Y^{th} optical region is arranged near an optical center of the second lens element, the 2Y^{th} optical region comprises a second region A and a second region B, a plurality of self-contained insular regions are arranged in the second region A, the second region B is substantially formed by the base region or a plurality of self-contained insular regions are distributed in the second region B, and the second region B has a lower distribution density of insular regions than the second region A; and
the first lens element and the second lens element are configured in such a way that when the first lens element and the second lens element are placed parallel to each other and coaxially, at least one relative position exists for the first lens element and the second lens element, to make the two lens elements meet a specific relationship, and the specific relationship comprises:
(1) a projection of the first region A of the first lens element on the second lens element at least partially overlaps with the second region B of the second lens element; and
(2) a projection of the second region A of the second lens element on the first lens element at least partially overlaps with the first region B of the first lens element.

30. The optical lens group according to claim 29, wherein the specific relationship has one or more of the following features:
(1) a plurality of first regions A spaced apart from each other are arranged in the 1Yth optical area;
(2) a plurality of first regions B spaced apart from each other are arranged in the 1Yth optical area;
(3) a plurality of second regions A spaced apart from each other are arranged in the 2Yth optical area; and
(4) a plurality of second regions B spaced apart from each other are arranged in the 2Yth optical area.

31. The optical lens group according to claim 29, wherein the specific relationship has one or more of the following features:
(1) a plurality of first regions A spaced apart from each other and a plurality of first regions B spaced apart from each other in the 1Yth optical region are alternately arranged in a circumferential direction;
(2) a plurality of second regions A spaced apart from each other and a plurality of second regions B spaced apart from each other in the 2Yth optical region are alternately arranged in a circumferential direction;
(3) a plurality of first regions A spaced apart from each other and a plurality of first regions B spaced apart from each other in the 1Yth optical region are alternately arranged in a radial direction;
(4) a plurality of second regions A spaced apart from each other and a plurality of second regions B spaced apart from each other in the 2Yth optical region are alternately arranged in a radial direction;
(5) a plurality of first regions A spaced apart from each other and a plurality of first regions B spaced apart from each other in the 1Yth optical region are alternately arranged in a straight-line direction; and
(6) a plurality of second regions A spaced apart from each other and a plurality of second regions B spaced apart from each other in the 2Yth optical region are alternately arranged in a straight-line direction.

32. The optical lens group according to claim 29, wherein the specific relationship has one or more of the following features:
(1) projections of M first regions A of the first lens element on the second lens element partially overlap or completely overlap with M second regions B of the second lens element in one-to-one correspondence; and
(2) projections of N second regions A of the second lens element on the first lens element partially overlap or completely overlap with N first regions B of the first lens element in one-to-one correspondence, wherein
M and N are natural numbers self-contained from each other.

33. The optical lens group according to claim 29, wherein the specific relationship has one or more of the following features:
(1) an overlapping part of the projection of the first region A on the second lens element and the second region B accounts for 50% or more of each of an area of the first region A and an area of the first region B; and
(2) an overlapping part of the projection of the second region A on the first lens element and the first region B accounts for 50% or more of each of an area of the first region B and an area of the second region A.

34. The optical lens group according to claim 29, having one or more of the following features:
(1) all first regions A on the first lens element form a rotationally symmetric pattern, and a rotational symmetry center of the rotationally symmetric pattern is the optical center of the first lens element;
(2) all first regions B on the first lens element form a rotationally symmetric pattern, and a rotational symmetry center of the rotationally symmetric pattern is the optical center of the first lens element;
(3) all second regions A on the second lens element form a rotationally symmetric pattern, and a rotational symmetry center of the rotationally symmetric pattern is the optical center of the second lens element; and
(4) all second regions B on the second lens element form a rotationally symmetric pattern, and a rotational symmetry center of the rotationally symmetric pattern is an optical center of the second lens element.

35. The optical lens group according to claim 29, having one or more of the following features:
(1) one or each first region A of the first lens element is in an annular shape, and a symmetry center of the annular shape is the optical center of the first lens element;
(2) one or each first region B of the first lens element is in an annular shape, and a symmetry center of the annular shape is the optical center of the first lens element;
(3) one or each second region A of the second lens element is in an annular shape, and a symmetry center of the annular shape is the optical center of the second lens element; and
(4) one or each second region B of the second lens element is in an annular shape, and a symmetry center of the annular shape is the optical center of the second lens element.

36. The optical lens group according to claim 29, having one or more of the following features:
(1) the 1Yth optical region is formed by one or more first regions A and one or more first regions B;
(2) the 2Yth optical region is formed by one or more second regions A and one or more second regions B;
(3) in the 1Yth optical region, a total area of the insular regions ranges from 10% to 60% relative to a total area of the 1Yth optical region; and
(4) in the 2Yth optical region, a total area of the insular regions ranges from 10% to 60% relative to a total area of the 2Yth optical region.

37. The optical lens group according to claim 29, wherein the specific relationship has one or more of the following features:
(1) a projection of the 1Yth optical region on the second lens element partially or completely overlaps with the 2Yth optical region;
(2) a projection of the 2Yth optical region on the first lens element partially or completely overlaps with the 1Yth optical region;
(3) a shape of the 1Yth optical region of the first lens element is a rotationally symmetrical pattern, and a symmetry center of the rotationally symmetric pattern is the optical center of the first lens element;
(4) a shape of the 2Yth optical region of the second lens element is a rotationally symmetrical pattern, and a symmetry center of the rotationally symmetric pattern is the optical center of the second lens element.

38. The optical lens group according to claim 29, having one or more of the following features:
(1) a 1X^{th} optical region is further arranged near the optical center of the first lens element, the 1X^{th} optical region is closer to the optical center of the first lens element than the 1Yth optical region, and the 1X^{th} optical region is substantially formed by the base region; and
(2) a 2X^{th} optical region is further arranged near the optical center of the second lens element, the 2X^{th} optical region is closer to the optical center of the second lens element than the 2Yth optical region, and the 2X^{th} optical region is substantially formed by the base region.

39. The optical lens group according to claim 38, having one or more of the following features:
(1) a projection of the 1X^{th} optical region on the second lens element partially or completely overlaps with the 2X^{th} optical region;
(2) a projection of the 2X^{th} optical region on the first lens element partially or completely overlaps with the 1X^{th} optical region;
(3) a shape of the 1X^{th} optical region of the first lens element is a rotationally symmetrical pattern, and a symmetry center of the rotationally symmetric pattern is the optical center of the first lens element;
(4) a shape of the 2X^{th} optical region of the second lens element is a rotationally symmetrical pattern, and a symmetry center of the rotationally symmetric pattern is the optical center of the first lens element.

40. The optical lens group according to claim 29, having one or more of the following features:
(1) a 1Z^{th} optical region is further arranged near the optical center of the first lens element, the 1Z^{th} optical region is farther away from the optical center than the 1Yth optical region, and a plurality of self-contained insular regions are arranged in the 1Z^{th} optical region; and
(2) a 2Z^{th} optical region is further arranged near the optical center of the second lens element, the 2Z^{th} optical region is farther away from the optical center than the 2Yth optical region, and a plurality of self-contained insular regions are arranged in the 2Z^{th} optical region.

41. The optical lens group according to claim 40, wherein the specific relationship has one or more of the following features:
(1) a projection of the 1Z^{th} optical region on the second lens element partially or completely overlaps with the 2Z^{th} optical region;
(2) a projection of the 2Z^{th} optical region on the first lens element partially or completely overlaps with the 1Z^{th} optical region;
(3) the 1Z^{th} optical region and the 2Z^{th} optical region have substantially the same distribution density of insular regions;
(4) a shape of the 1Z^{th} optical region of the first lens element is a rotationally symmetrical pattern, and a symmetry center of the rotationally symmetric pattern is the optical center of the first lens element;
(5) a shape of the 2Z^{th} optical region of the second lens element is a rotationally symmetrical pattern, and a symmetry center of the rotationally symmetric pattern is the optical center of the first lens element.

42. The optical lens group according to claim 38, having one or more of the following features:
(1) the 1X^{th} optical region is located within a circular region with a radius of R₁ mm and with the optical center of the first lens element as the center, and R₁ is any value between 2.5 and 10;
(2) the 2X^{th} optical region is located within a circular region with a radius of R₁ mm and with the optical center of the second lens element as the center, and R₁ is any value between 2.5 and 10;
(3) the 1X^{th} optical region does not overlap with the 1Yth optical region; and
(4) the 2X^{th} optical region does not overlap with the 2Yth optical region.

43. The optical lens group according to claim 29, having one or more of the following features:
(1) the 1Yth optical region is located within a circular region with a radius of R₂ mm and with the optical center of the first lens element as the center, and R₂ is any value between 5 and 35; and
(2) the 2Yth optical region is located within a circular region with a radius of R₂ mm and with the optical center of the second lens element as the center, and R₂ is any value between 5 and 35.

44. The optical lens group according to claim 41, having one or more of the following features:
(1) the 1Z^{th} optical region is located within a circular region with a radius of R₃ mm and with the optical center of the first lens element as the center, and R₃ is any value between 5 and 35;
(2) the 2Z^{th} optical region is located within a circular region with a radius of R₃ mm and with the optical center of the second lens element as the center, and R₃ is any value between 5 and 35;
(3) the 1Z^{th} optical region does not overlap with the 1Yth optical region; and
(4) the 2Z^{th} optical region does not overlap with the 2Yth optical region.

45. The optical lens group according to claim 29, having one or more of the following features:
(1) In the first lens element, a region other than insular regions is a base region.
(2) In the second lens element, a region other than insular regions is a base region.

46. The optical lens group according to claim 29, having one or more of the following features:
(1) a shape of a section of one or each insular region is a circle or a similar shape;
(2) an outer diameter of one or each insular region ranges from 0.8 mm to 2.0 mm;
(3) an area of one or each insular region ranges from 0.50 mm² to 3.14 mm²; and
(4) one or each insular region conforms to a ratio of L² to S ranging from 4π to 20, wherein L is a perimeter of the insular region, and S is an area of the insular region.

47. The optical lens group according to claim 29, having one or more of the following features:
(1) a surface shape of the insular region of the first lens element is different from a surface shape of the base region, so that a refractive power of the insular region is different from a refractive power of the base region; and
(2) a surface shape of the insular region of the second lens element is different from a surface shape of the base region, so that a refractive power of the insular region is different from a refractive power of the base region.

48. The optical lens group according to claim 29, having one or more of the following features:
(1) a surface shape of the insular region of the first lens element is formed into a convex shape or a concave shape relative to a surface shape of the base region; and
(2) a surface shape of the insular region of the second lens element is formed into a convex shape or a concave shape relative to a surface shape of the base region.

49. The optical lens group according to claim 29, having one or more of the following features:
(1) the insular region of the first lens element is made of a material different from a material of the base region of the first lens element, so that the insular region of the first lens element has a refractive power different from a refractive power of the base region of the first lens element; and
(2) the insular region of the second lens element is made of a material different from a material of the base region of the second lens element, so that the insular region of the second lens element has a refractive power different from a refractive power of the base region of the second lens element.

50. The optical lens group according to claim 29, having one or more of the following features:
(1) an equivalent diameter of the first lens element is 40 mm or more;
(2) an equivalent diameter of the second lens element is 40 mm or more;
(3) a thickness of the first lens element at a thinnest position is 0.5 mm or more;
(4) a thickness of the second lens element at a thinnest position is 0.5 mm or more; and
(5) the first lens element and the second lens element have substantially the same shape and size.

51. The optical lens group according to claim 29, having one or more of the following features:
(1) the first lens element is an optical lens having a function of inhibiting the development of myopia, and the insular region of the first lens element has a refractive power obtained by adding a positive refractive power to the base refractive power; and
(2) the first lens element is an optical lens having a function of inhibiting the development of hypermetropia, and the insular region of the first lens element has a refractive power obtained by adding a negative refractive power to the base refractive power.

52. The optical lens group according to claim 29, having one or more of the following features:
(1) the second lens element is an optical lens having a function of inhibiting the development of myopia, and the insular region of the second lens element has a refractive power obtained by adding a positive refractive power to the base refractive power; and
(2) the second lens element is an optical lens having a function of inhibiting the development of hypermetropia, and the insular region of the second lens element has a refractive power obtained by adding a negative refractive power to the base refractive power.

53. The optical lens group according to claim 29, wherein the first lens element and the second lens element are respectively configured to be worn in front of the two eyes of the wearer.

54. The optical lens group according to claim 29, wherein the first lens element and the second lens element are spectacle lenses; optionally, the first lens element and the second lens element are non-contact spectacle lenses; and optionally, the first lens element and the second lens element are contact spectacle lenses.

55. The optical lens group according to claim 29, wherein each of the first lens element and/or the second lens element is independently the lens element according to any one of claims 1 to 25.

56. The optical lens group according to claim 29, having one or more of the following features:
(1) at least some of the insular regions on the first lens element are adjacent to each other and have a shared edge; and
(2) at least some of the insular regions on the second lens element are adjacent to each other and have a shared edge.

57. The optical lens group according to claim 29, having one or more of the following features:
(1) one or more insular regions on the first lens element are partially or completely surrounded by one or more other insular regions; and
(2) one or more insular regions on the second lens element are partially or completely surrounded by one or more other insular regions.

58. The optical lens group according to claim 29, having one or more of the following features:
(1) each of the plurality of insular regions independently has any one of the following refractive surfaces: a spherical refractive surface, an aspherical refractive surface, a normally curved refractive surface, a toric refractive surface, a concave refractive surface, or a convex refractive surface.
(2) the base region has one or more of the following refractive surfaces: a spherical refractive surface, an aspherical refractive surface, a normally curved refractive surface, a toric refractive surface, a concave refractive surface, or a convex refractive surface.

59. A pair of spectacles, comprising a spectacle frame and an optical lens group mounted on the spectacle frame, wherein the optical lens group is the optical lens group according to any one of claims 29 to 58.

60. A method for assembling a pair of spectacles, comprising:
providing a spectacle frame and an optical lens group mounted on the spectacle frame, wherein the optical lens group is the optical lens group according to any one of claims 29 to 58; and
respectively mounting the first lens element and the second lens element on the spectacles frame at positions corresponding to a first eye and a second eye of a wearer, wherein
relative positions of the first lens element and the second lens element are configured to satisfy the following specific relationship, wherein the specific relationship comprises:
(1) the first region A of the first lens element forms a 1A^{th} projection on the first eye, the second region B of the second lens element forms a 2B^{th} projection on the second eye, and the 1A^{th} projection after being translated by an interpupillary distance toward the second eye can at least partially overlap or completely overlap with the 2B^{th} projection; and
(2) the second region A of the second lens element forms a 2A^{th} projection on the second eye, the first region B of the first lens element forms a 1B^{th} projection on the first eye, and the 2A^{th} projection after being translated by the interpupillary distance toward the first eye can at least partially overlap or completely overlap with the 1B^{th} projection.
